# EUROPEAN PATENT APPLICATION

(11) **EP 4 845 318 A2**
(43) Date of publication of application: **25.11.2026**
(21) Application number: 26175709.0
(22) Date of filing: 30.04.2026
(51) Int. Cl.: H05K 7/00, H05K 5/00

(54) **STAND-ALONE OUTDOOR MODULAR DATA CENTER (SERVER FARM) FOR AI/ML WORKLOADS**

(30) Priority: 30.04.2025 US 202563797459 P
(71) Applicant: Google LLC, Mountain View, CA 94043 (US)
(72) Inventor: MASRI, Ferris, Mountain View, California, 94043 (US); PARSAN, Parthipan, Mountain View, California, 94043 (US); VITTHAL, Mehal, Mountain View, California, 94043 (US); SANDHU, Angad, Mountain View, California, 94043 (US); SAKALKAR, Varun, Mountain View, California, 94043 (US)
(74) Representative: Betten & Resch

(57) **Abstract**

A data center site layout may be designed to eliminate several components from traditional data center sites and to support artificial intelligence (AI)/machine learning (ML) workloads, which have increasing power demands as high-performance computing systems and thus require significant cooling. These components may be eliminated through a highway system including power lines, piping for coolant, and/or fiberoptic cables routed between sets of standalone, containerized data centers. As such, the data center site may include microgrids for on-site energy production and may remove the need for freshwater. The design may include a network of piping between data centers to circulate coolant within advanced liquid cooling technology.

## Description

### CROSS REFERENCE TO RELATED APPLICATION

This application claims the benefit of the filing date of United States Provisional Application No. 63/797,459, filed on April 30, 2025, the disclosure of which is hereby incorporated by reference.

### BACKGROUND

Existing data center sites require a significant amount of time to build and a significant amount of real estate. For example, existing data center sites require space to include dedicated electrical and mechanical yards, a main data center building including office space and similar facilities to support on-site personnel, and a dedicated space for fans, in addition to a dedicated space for data center racks. Additionally, to enable on-site maintenance, access to internal spaces may be provided through walk-in aisles, resulting in otherwise unused space within the data centers. As such, this system results in an increased consumption of real estate.

Additionally, data centers with artificial intelligence (Al)/machine learning (ML) workloads have increasing power demands and thermal challenges, thus requiring significant cooling.

Further, existing data center sites require complex and time-consuming construction processes, often requiring several months to years. These construction processes typically require on-site construction of a permitted building to house data center racks and supporting infrastructure. These construction processes also typically require on-site assembly and integration of the individual data center racks within the building.

Some existing modular data center systems include: (1) mating modules together to form a server hall within a building, (2) standalone modules that include walk-in modules for full interior access, and (3) repurposed shipping containers. However, these systems limit scalability because customization and expansion are limited. Additionally, repurposed shipping containers are particularly limiting because the dimensions of shipping containers have space constraints, and maintaining an optimal temperature and airflow is challenging.

Existing structural support and conveyance systems of modular data systems typically require a separate installation process. One method includes on-site fabrication and assembly of steel or concrete structures to support the building and internal components, and another method includes prefabricated modules with separate support structures for conveyance systems installed within valuable space of the module. However, these methods require extensive coordination and labor and are thus time-consuming and expensive. Additionally, these methods require high material consumption and transportation needs, contributing to a large carbon footprint.

Additionally, existing enclosure systems of modular data systems typically require complicated and time-consuming construction processes. One method includes casting concrete wall panels off-site and tilting the panels into place on-site to form the walls of an enclosure. However, this method is time-consuming because of the time required to cure the concrete panels. Additionally, this method can be unsafe because of the heavy equipment required to lift and position the concrete panels. Further, this method has significant environmental impact with the production of concrete. Another method includes prefabricated modules that still require construction of the roof and walls at the modular integration facility. However, this method is logistically complex and costly due to the amount of space required for transportation.

### BRIEF SUMMARY

The present disclosure is generally directed to a data center site layout designed to eliminate several components from traditional data center sites. The data center site layout described herein includes a plurality of containerized units for housing machines executing machine learning workloads. The containerized units can be arranged in any configuration, where each containerized unit is connected to a highway system including high-voltage and low- voltage power lines, piping for coolant, and/or fiberoptic cables. The piping can provide coolant to and from the containerized units to support the high cooling needs for artificial intelligence (Al)/machine learning (ML) workloads. The modular data center may eliminate the need for a building structure or walk-in module.

The containerized units may be any containers adapted to house servers, processors, or other computer units. In some examples, the containerized units may be preassembled transportable units including internal components, such as data center racks, power distribution, cooling, and/or network connectivity. In some examples, enclosures for the containerized units may be transported separately without the internal components.

Each containerized unit may be supported by a base. The bases may have a lightweight design and an increased strength-to-weight ratio. The base may include openings along its width and length to support one or more services, such as coolant supply and return piping, power conduits and power cables, controls wiring, and/or fiberoptic conduit and fiberoptic cables.

In one aspect, a data center site may include at least two containerized, standalone data center units positioned adjacent to each other. Each unit may house at least one artificial intelligence (AI) rack having at least one AI chip. The data center site may also include a highway system between the at least two units. The highway system may include piping to transport coolant to cool the at least one AI rack. The unit may be not enclosed by a building.

In some examples, the piping may be in two lanes.

In some examples, the highway system may include power lines and a first set of fiberoptic cables.

In some examples, the data center site may include a second set of fiberoptic cables transverse to the first set of fiberoptic cables.

In some examples, the first set of fiberoptic cables may be in two lanes.

In some examples, the power lines may be low-voltage power lines. The low-voltage power lines may be in two lanes. In other examples, the power lines may be medium-voltage power lines. The medium-voltage power lines may be in two lanes.

In some examples, the piping may be positioned underneath each unit. The at least one of the two units may include a base including an aperture to receive the piping to be routed to and from an interior of the at least one of the two units.

In another aspect, an individual containerized unit may include an enclosure including a first wall connected to a third wall and a fourth wall. The third wall may oppose the fourth wall. The enclosure may also include a second wall connected to the third and fourth walls. The first wall may oppose the second wall. The enclosure may also include a roof connected to at least one of the first, second, third, or fourth walls. The enclosure may also include a floor plate connected to at least one of the first, second, third, or fourth walls. The roof may be opposing the floor plate. The enclosure may also include at least one aperture within at least one of the first or third walls. The individual containerized unit may also include a plurality of data center racks positioned in a row on the floor plate. The individual containerized unit may also include an air cooling unit on an end of the row of the plurality of data center racks. At least one of the plurality of data center racks or an air cooling unit may be accessible from the at least one aperture.

In some examples, the individual containerized unit may also include at least one access panel attached to the enclosure such that each of the at least one access panel can be manipulated to cover the at least one aperture.

In some examples, the individual containerized unit may also include a base under the floor plate. The base may include a plurality of rectangular frames and triangular frames perpendicular to each other. Each triangular frame may be parallel to each other, and each rectangular frame may be parallel to each other.

In some examples, each rectangular frame may include a first edge connected to a third edge and a fourth edge, and a second edge connected to the third edge and the fourth edge. The first edge may be parallel to the second edge and the third edge may be parallel to the fourth edge. The first edge may include a first midpoint, and the second edge may include a second midpoint. A third length may be connected to the first midpoint of the first edge and may be connected to the second midpoint of the second edge so as to define a first opening and a second opening .

In some examples, the individual containerized unit may also include piping in at least one of the first opening or the second opening such that the piping may be parallel to the first wall and the second wall.

In some examples, each rectangular frame may include at least one of a first support connecting the third edge to the first edge or a second support connecting the fourth edge to the first edge.

In some examples, each triangular frame may include a sixth edge connected to a third support and a fourth support. Each triangular frame may also include a seventh edge connected to a third support and a fourth support such that the seventh edge, the third support, and the fourth support define a triangular opening. The seventh edge may be parallel to the sixth edge.

In some examples, the individual containerized unit may also include a base under the floor plate. The base may include a first beam having a first plurality of openings and a second beam having a second plurality of openings. The second beam may be parallel to the first beam so that each of the first plurality of openings align with each of the second plurality of openings. The individual containerized unit may also include internal beams including an internal plurality of openings. The internal beams extending between the first and second beams and positioned between each of the first and second plurality of openings such that each of the internal plurality of openings may be aligned.

In some examples, the at least one of the internal plurality of openings or the first and second plurality of openings may be circular.

In some examples, the individual containerized unit may also include piping in the internal plurality of openings such that the piping may be parallel to the first beam and the second beam.

In some examples, the individual containerized unit may also include at least one of power conduits and power cables, controls wiring, or fiberoptic conduit and fiberoptic cables in the first and second plurality of openings.

In some examples, the individual containerized unit may also include a base under the floor plate. The base may include a first edge connected to a second edge by a first plurality of length connectors such that the first edge, the second edge, and the first plurality of length connectors define a first plurality of openings. The base may also include a third edge connected to a fourth edge by a second plurality of length connectors such that the third edge, the fourth edge, and the second plurality of length connectors define a second plurality of openings. The first edge and the third edge may be connected by a first plurality of width connectors, and the second edge and the fourth edge may be connected by a second plurality of width connectors, such that the first and second plurality of width connectors define a third opening.

In some examples, the second plurality of width connectors may be connected to each other by a series of supports.

In some examples, the individual containerized unit may also include piping within the third opening such that the piping may be parallel to the first, second, third, and fourth edges.

In some examples, the individual containerized unit may also include at least one of power conduits and power cables, controls wiring, or fiberoptic conduit and fiberoptic cables in the first and second plurality of openings.

In yet another aspect, an individual containerized unit may include a first panel hingedly connected to a first edge of a second panel. The second panel may have a second edge opposing the first edge. The second edge of the second panel may be hingedly connected to a third panel. The individual containerized unit may also include a fourth panel and a fifth panel. In an assembled position, the first panel may be parallel to the third panel, the fourth panel may be parallel to the fifth panel, and the second panel may be perpendicular to the first, third, fourth, and fifth panels. In an unassembled position, the first, second, and third panels may be parallel.

In some examples, the individual containerized unit may also include a floor plate such that, in the assembled position, the floor plate may be parallel to the second panel and may be perpendicular to the first, third, fourth, and fifth panels.

In some examples, the floor plate may be connected to the first panel.

In some examples, the first panel may have a first internal surface intended to face the third panel in the assembled position and a first external surface intended to face away from the third panel in the assembled position. The second panel may have a second internal surface intended to face the floor plate in the assembled position and a second external surface intended to face away from the floor plate in the assembled position. The third panel may have a third internal surface intended to face the first panel in the assembled position and a third external surface intended to face away from the first panel in the assembled position. In the unassembled position, the first internal surface of the first panel may face the second internal surface of the second panel, and the second external surface of the second panel may face the third external surface of the third panel.

In yet another aspect, an individual containerized unit may include a first panel hingedly connected to a first edge of a second panel. The second panel may have a second edge opposing the first edge. The second edge of the second panel hingedly connected to a third edge of a third panel. The third panel may have a fourth edge opposing the third edge. the fourth edge of the third panel hingedly connected to a fourth panel. The individual containerized unit may include a fifth panel and a sixth panel. In an assembled position, the first panel may be parallel to the fourth panel, the fifth panel may be parallel to the sixth panel, and the second and third panels may be perpendicular to the first, third, fourth, and fifth panels. In an unassembled position, the first, second, third, and fourth panels may be parallel.

In some examples, the individual containerized unit may also include a floor plate such that, in the assembled position, the floor plate may be parallel to the second and third panels and may be perpendicular to the first, fourth, fifth, and sixth panels.

In some examples, the floor plate may be connected to the first panel.

In some examples, the first panel may have a first internal surface intended to face the fourth panel in the assembled position and a first external surface intended to face away from the fourth panel in the assembled position. The second panel may have a second internal surface intended to face the floor plate in the assembled position and a second external surface intended to face away from the floor plate in the assembled position. The third panel may have a third internal surface intended to face the floor plate in the assembled position and a third external surface intended to face away from the floor plate in the assembled position. The fourth panel may have a fourth internal surface intended to face the first panel in the assembled position and a fourth external surface intended to face away from the first panel in the assembled position. In the unassembled position, the first internal surface of the first panel may face the second internal surface of the second panel, the second external surface of the second panel may face the third external surface of the third panel, and the third internal surface of the third panel may face the fourth internal surface of the fourth panel.

In yet another aspect, a data center site may comprise at least two containerized, standalone data center units positioned adjacent to each other. Each unit may house at least one data center rack. The data center site may further comprise a highway system between the at least two units. The highway system may comprise piping configured to transport coolant to cool the at least two containerized, standalone data center units. The units may not be enclosed by a building.

In some examples, the at least two containerized, standalone data center units may be positioned on a first level below a second level. The data center site may further comprise a chilling unit on the second level.

In some examples, the chilling unit may be positioned on a platform positioned above one of the at least two containerized, standalone data center units.

In some examples, the piping may be in two lanes.

In some examples, the highway system may further comprise power lines and fiberoptic cables.

In some examples, the piping may be positioned underneath the power lines.

In some examples, the piping may be positioned adjacent to at least one of the power lines or the fiberoptic cables.

In some examples, the power lines may include low-voltage power lines or medium-voltage power lines.

In some examples, the fiberoptic cables may be positioned within a trench.

In yet another aspect, an individual containerized unit may comprise an enclosure, which may comprise a first wall connected to a third wall and a fourth wall. The third wall may oppose the fourth wall. A second wall may be connected to the third and fourth walls, and the first wall may oppose the second wall. The enclosure may further comprise a roof connected to at least one of the first, second, third, or fourth walls. The enclosure may further comprise a floor plate connected to at least one of the first, second, third, or fourth walls. The roof may oppose the floor plate. The enclosure may further comprise at least one aperture within at least one of the first or third walls. The enclosure may further comprise a plurality of data center racks positioned in a row on the floor plate. The enclosure may further comprise an air cooling unit on an end of the row of the plurality of data center racks. At least one of the plurality of data center racks or an air cooling unit may be accessible from the at least one aperture.

In some examples, the individual containerized unit may further comprise at least one access panel attached to the enclosure such that each of the at least one access panel can be manipulated to cover the at least one aperture.

In some examples, the individual containerized unit may further comprise an isolator assembly connected to the floor plate. The isolator assembly may comprise at least one of a shock isolator or a vibration isolator.

In some examples, the isolator assembly may be removable.

In some examples, the individual containerized unit may further comprise an anchor clip including at least one fastener hole configured to receive a fastener to secure the individual containerized unit to a foundation.

In some examples, the individual containerized unit may further comprise at least one dehumidifier unit on one of the first, second, third, or fourth walls. The at least one dehumidifier may be configured to remove excess moisture from air within the individual containerized unit to control a humidity level inside the individual containerized unit.

In some examples, the individual containerized unit may further comprise at least one pressurization unit on one of the first, second, third, or fourth walls. The at least one pressurization unit may be configured to maintain a negative pressure inside the individual containerized unit.

In some examples, the individual containerized unit may further comprise a first pipe on one of the first, second, third, or fourth walls. The first pipe may be configured to transmit coolant to the individual containerized unit.

In some examples, the individual containerized unit may further comprise a second pipe on the one of the first, second, third, or fourth walls. The second pipe may be configured to transmit warmed coolant away from the individual containerized unit.

In some examples, the one of the first, second, third, or fourth walls that comprises the first pipe may further comprise at least one electrical panel and at least one fiberoptic cable connector.

In some examples, the individual containerized unit may further comprise a curtain in an interior of the individual containerized unit.

### BRIEF DESCRIPTION OF THE DRAWINGS

FIG. 1A is a side perspective view of an example individual containerized unit, according to aspects of the disclosure.
FIG. 1B is an exploded view of the individual containerized unit of FIG. 1A.
FIG. 1C is a side and back perspective view of the individual containerized unit of FIG. 1A.
FIG. 1D is a back view of the individual containerized unit of FIG. 1A.
FIG. 1E is a perspective view of a portion of a base of the individual containerized unit of FIG. 1A.
FIG. 1F is a back view of the portion of the base FIG. 1E.
FIG. 1G is a side view portion of the portion of the base FIG. 1E.
FIG. 1H is a side perspective view of a portion of a base of an individual containerized unit, according to aspects of the disclosure.
FIG. 1I is a side back perspective view of the portion of the base of FIG. 1H.
FIG. 2A is a side perspective view of another example base of an individual containerized unit, according to aspects of the disclosure.
FIG. 2B is a side perspective view of a portion of an example individual containerized unit including the base of FIG. 2A.
FIG. 2C is a side perspective view of the example individual containerized unit of FIG. 2B.
FIG. 2D is a beam of the base of FIG. 2A during a first, second, third portion of a manufacturing process.
FIG. 3 is a side perspective view of another example base of an individual containerized unit, according to aspects of the disclosure.
FIG. 4A is an exploded view of an enclosure of an individual containerized unit, according to aspects of the disclosure.
FIG. 4B is a side perspective view of the enclosure of FIG. 4A in an unassembled position.
FIG. 4C is a side perspective view of the enclosure of FIG. 4A in an assembled position.
FIG. 5A is an exploded view of another example enclosure of an individual containerized unit, according to aspects of the disclosure.
FIG. 5B is a side perspective view of the enclosure of FIG. 5A in an unassembled position.
FIG. 5C is a back view of the enclosure of FIG. 5B in an unassembled position.
FIG. 5D is a back view of the enclosure of FIG. 5C in an intermediate position.
FIG. 5E is a back view of the enclosure of FIG. 5D in an assembled position.
FIG. 5F is a side perspective view of a portion of the enclosure of FIG. 5E in the assembled position.
FIG. 6A is a side perspective view of an example individual containerized unit, according to aspects of the disclosure.
FIG. 6B is a side view of the individual containerized unit of FIG. 6A.
FIG. 6C is a top view of a portion of the individual containerized unit of FIG. 6A.
FIG. 6D is another top view of a portion of the individual containerized unit of FIG. 6A.
FIG. 7 is a plan view of an example data center site, according to aspects of the disclosure.
FIG. 8A is a top perspective view of an example data center site, according to aspects of the disclosure.
FIG. 8B is a top perspective view of a portion of the data center site of FIG. 8A.
FIG. 8C is another top perspective view of a portion of the data center site of FIG. 8A.
FIG. 9 is a perspective view of another example data center site, according to aspects of the disclosure.
FIG. 10A is a side perspective view of another example individual containerized unit, according to aspects of the disclosure.
FIG. 10B is an exploded view of the individual containerized unit of FIG. 10A.
FIG. 10C is another side perspective view of the individual containerized unit of FIG. 10A.
FIG. 10D is a back perspective view of a portion of the individual containerized unit of FIG. 10A.
FIG. 10E is another back perspective view of the individual containerized unit of FIG. 10A.
FIG. 10F is another perspective view of a portion of the individual containerized unit of FIG. 10A with a focus on an isolator assembly.
FIG. 10G is another perspective view of a portion of the individual containerized unit of FIG. 10A with a focus on an anchor clip.
FIG. 11A is a top plan view of another example data center site, according to aspects of the disclosure.
FIG. 11B is a top perspective view of a portion of the data center site of FIG. 11A.
FIG. 11C is another top perspective view of another portion of the data center site of FIG. 11A.
FIG. 12A is a side perspective view of a portion of another example data center site, according to aspects of the disclosure.
FIG. 12B is a top perspective view of the data center site of FIG. 12A.

### DETAILED DESCRIPTION

A data center site layout described herein eliminates several components from traditional data center sites. For example, the data center site may eliminate the need for dedicated electrical and/or mechanical yards, a main data center building including office space, and a dedicated space for fans. These components may be eliminated through a highway system including power lines, piping for coolant, and/or fiberoptic cables routed between sets of containerized data centers. As such, the data center site may include microgrids for on-site energy production and may remove the need for freshwater.

The data center site layout may support AI/ML workloads, which increases power and cooling demands as compared to other computer workloads. For example, the piping of coolant through the highway system may support direct liquid cooling of AI/ML processing chips. The piping may extend between and underneath the individual containerized units to circulate coolant within advanced liquid cooling technology.

The data center site layout is customizable with infinite permutations because the highway system of services is not limited in shape or total length and the individual containerized units can be arranged in any configuration. Moreover, the arrangement is not constrained by the size or shape of a physical building, such as a warehouse, and instead the individual containerized units can be arranged in open space without compromising security or effectiveness or risking damage to the machines. As such, mechanical, electrical, and rack equipment can be organized in any layout, which can be beneficial based on the available real estate.

The data center site layouts of the present disclosure can include any containerized, standalone data center. The present disclosure is also directed to example containerized, standalone data centers that can be placed in the data center sites of the present disclosure.

Modular data centers may be preassembled transportable units including internal components, such as data center racks, power distribution, cooling, and/or network connectivity. The modular data center may eliminate the need for a building structure or walk-in module. The pre-assembled units transform the server rack itself into the building for hyperscale infrastructure deployment.

Bases of an individual containerized unit may provide integrated structural and conveyance support. The bases may include openings along its width and length to support one or more services, such as coolant supply and return piping, power conduits and power cables, controls wiring, and/or fiberoptic conduit and fiberoptic cables. Thus, the base design may improve accessibility for maintenance and upgrades of the services through dedicated pathways. The base design may also increase strength-to-weight ratio because, despite the reduced weight, the base may maintain high structural strength.

The preassembled transportable unit may include a pre-fabricated enclosure for the data center. The enclosure may be designed to be transported with or without internal components. For example, the enclosure may be a flat-packed enclosure including flat panels for each wall and the roof. In other examples, the enclosure may be a foldable structure including a foldable roof connected to two of the four walls, with the other two walls separate from the foldable structure. The pre-fabricated enclosures may improve safety due to reduced on-site construction and minimized risks associated with working at heights and with heavy materials.

A data center site may include pre-assembled, stand-alone, and outdoor-ready multi-rack assemblies that are connected to site services. The pre-assembled data center modules may be designed to enable off-site maintenance, reducing the need for on-site personnel. The modularity, scalability, off-site manufacturing, and centralized maintenance in the data center site design results in a cost-effective, rapidly deployable, and scalable improvement to traditional data center sites.

The example modular data centers and components may improve construction efficiency through a streamlined and simplified construction process. As such, construction timelines may be accelerated compared to existing data center construction processes. The example modular data centers and components may also improve design flexibility. For example, the dimensions of the modular data center are customizable, which may increase computing capacity. Additionally, the arrangement of data center racks is also customizable. The example modular data centers and components may also decrease the overall cost of building a data center by reducing the space required for transportation and streamlining the construction process, thus also reducing labor costs. The example modular data centers and components may also improve quality control because factory-controlled manufacturing ensures consistent quality. The example enclosures may also reduce environmental impact using sustainable materials to lower the overall carbon footprint of a data center. The example base may also reduce environmental impact because, when the base includes steel, the design requires less steel tonnage compared to conventional solid beams, minimizing material consumption and embodied carbon. The example modular data centers and components may also circumvent regulatory barriers, such as complex permitting processes and regulatory hurdles related to building codes, transportation regulations, and zoning restrictions.

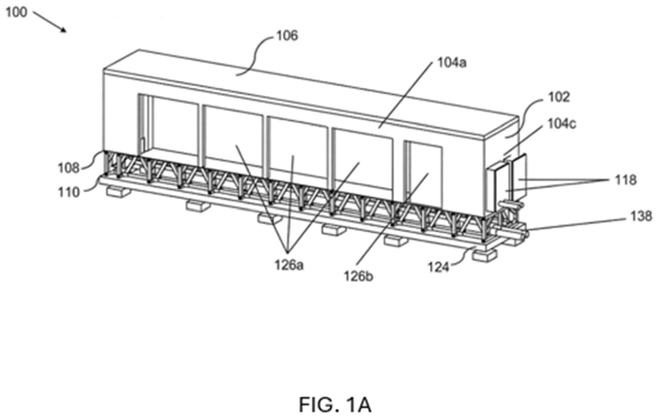

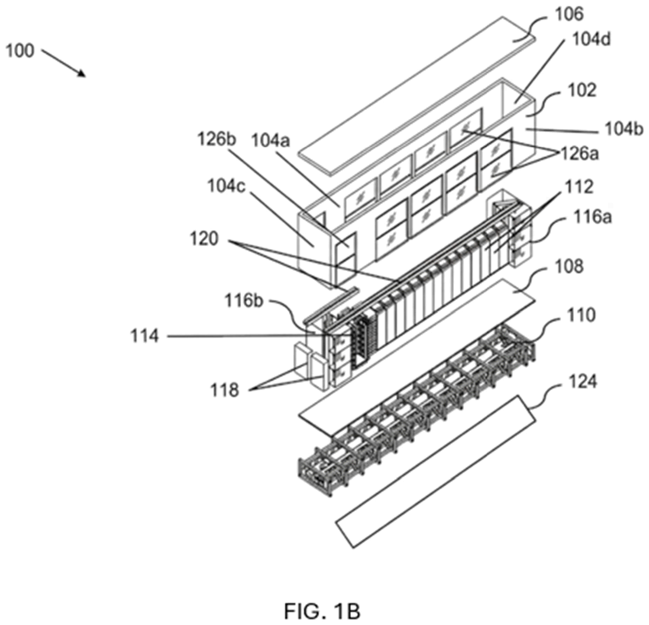

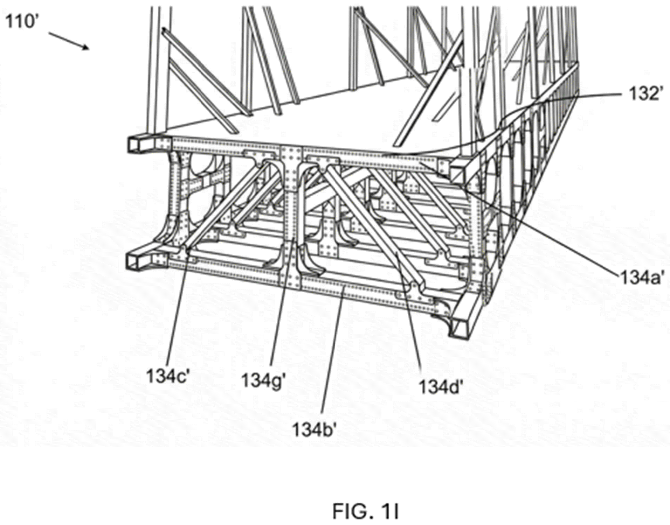

FIGs. 1A-1G illustrate an example individual containerized unit 100. As shown in FIGs. 1A and 1B, the individual containerized unit 100 may include an enclosure 102. The enclosure 102 may include a first wall 104a, a second wall 104b, a third wall 104c, a fourth wall 104d, a roof 106, and a floor plate 108. In other aspects, the enclosure 102 may include walls and a roof, or may include walls coupled to a roof. The floor plate 108 may be positioned on a base 110, and the base 110 may be positioned on a base support 124. The enclosure 102 may house the interior components of the individual containerized unit 100, the base 110 may provide integrated structural and conveyance support for the enclosure 102 and internal components, and the base support 124 may provide support for the base 110.

The enclosure 102 may be a rectangular shape. As such, enclosure 102 may include a first wall 104a parallel to a second wall 104b and a third wall 104c parallel to a fourth wall 104d. The first and second walls 104a, 104b may be perpendicular to the third and fourth walls 104c, 104d. Additionally, the first and second walls 104a, 104b may have a longer length than the third and fourth walls 104c, 104d.

The enclosure 102 may be weatherproof and may include protection against dust and water ingress. The enclosure 102 may include glulam, engineered wood or oriented strand board (OSB), metal alloys including but not limited to aluminum alloys or titanium alloys, steel including but not limited to stainless steel, structural steel or galvanized steel, high performance plastics including but not limited to PEEK or nylon carbon fiber, copper, stone, glass fiber reinforced polymers, fiber-reinforced polymers (FRP), or a mixture thereof.

The floor plate 108 may include concrete, wood including but not limited to glulam, engineered wood or oriented strand board (OSB), metal alloys including but not limited to aluminum alloys or titanium alloys, steel including but not limited to stainless steel or galvanized steel, high performance plastics including but not limited to PEEK or nylon carbon fiber, copper, stone, glass fiber reinforced polymers, fiber-reinforced polymers (FRP), or a mixture thereof. However, the floor plate may include any material that supports the weight of an individual containerized unit.

An interior within the enclosure 102, roof 106, and floor plate 108 may include at least one data center rack 112, at least one air cooling unit 116a, 116b, and/or power and fiber trays 120. A plurality of data center racks 112 may be adjacently positioned along the floor plate 108. There may be one row of fifteen racks 112 along the floor plate 108. However, there may be any number of rows of racks depending on the width of the base 110 and floor plate 108, and there may be any number of columns of racks depending on the length of the base 110 and floor plate 108. In addition to the data center racks 112, the enclosure 102 can also include different variations of data center racks.

A first air cooling unit 116a may be positioned between the row of racks 112 and the fourth wall 104d, and a second air cooling unit 116b may be positioned between interior piping system 114 and the third wall 104c. The first and second air cooling units 116a, 116b may function to cool the interior of the individual containerized unit 100.

Power and fiber trays 120 may be positioned along an interior of the length of the roof 106. The power and fiber trays 120 may function to enable the transmission of power and network connection to the individual containerized unit 100.

The exterior of the enclosure 102 may include electrical panels 118. Two electrical panels 118 may be positioned on the third wall 104c. The electrical panels 118 may enable transmission of power to the individual containerized unit 100.

The first and second walls 104a, 104b of the enclosure 102 may have at least one access panel 126a, 126b. For example, each of the first and second walls 104a, 104b may include five total access panels 126a, 126b. The access panels 126a, 126b may function so that the interior of the enclosure 102 can be accessed. The four access panels 126a closest to the fourth wall 104d may provide access to the racks 112, while the access panel 126b closest to the third wall 104c may provide access to the second air cooling unit 116b. In some aspects, a vehicle may be able to dock within a space in the enclosure 102 when the access panel 126a is opened. In other aspects, there may be any number of access panels positioned on any wall of the enclosure 102.

Since the internal components of the individual containerized unit 100 can be accessed through access panels 126a, 126b, the individual containerized unit 100 may not be designed for internal access outside of the access panels 126a, 126b. As such, aisle space may be reduced, which may result in a 25% reduction of required real estate.

The individual containerized unit 100 may use a dark data center operational model with off-site maintenance. A dark data center operational model may be a model that is not occupied. Therefore, there is no need to provide life safety systems, such as fire suppression, lights, emergency exits. In some examples, the individual containerized unit 100 may be repaired and maintained at an off-site facility for efficient management of the system.

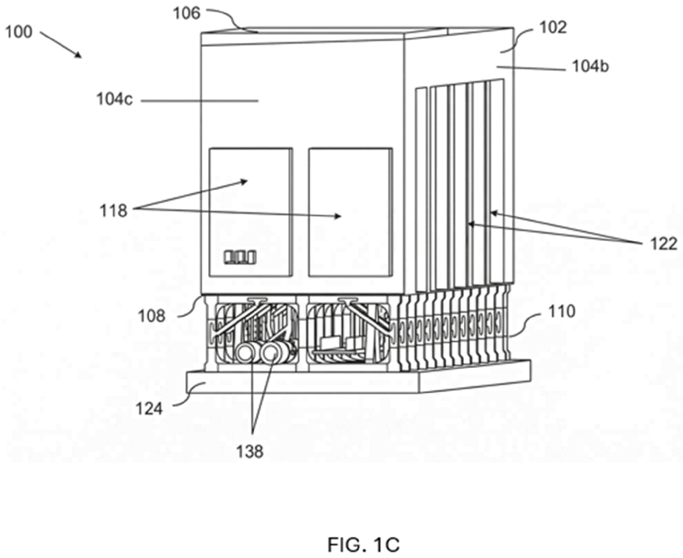

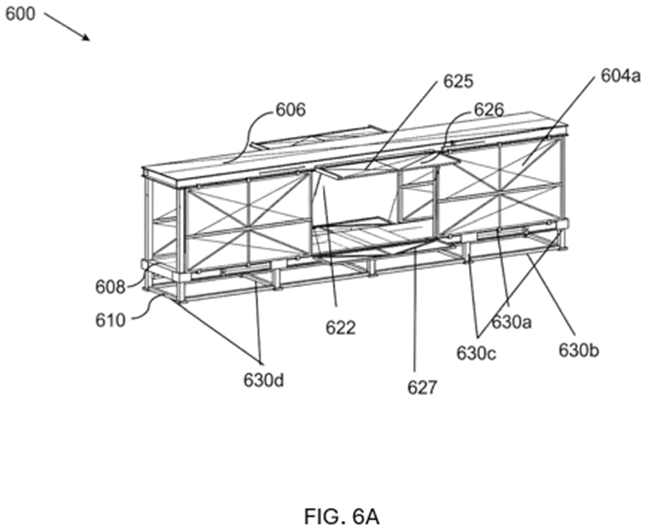

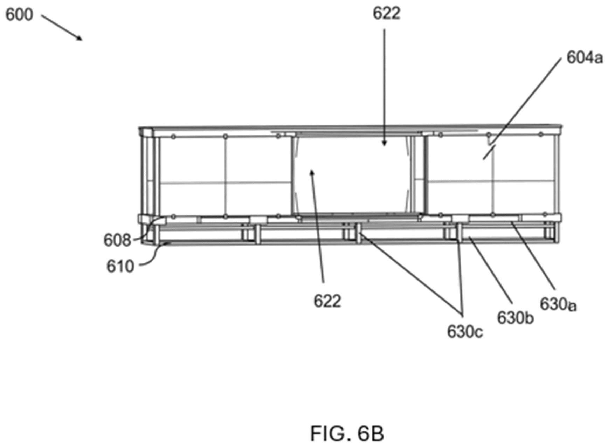

FIG. 1C illustrates the example individual containerized unit 100 without access panels 126, 126b obstructing each respective aperture 122 within the enclosure 102. For example, when an access panel 126a, 126b is opened, an aperture 122 in the enclosure 102 may provide access to the interior. To open the access panels 126a, 126b, each access panel 126a, 126b may each be one panel with a hinged connection to the enclosure 102 so that each panel can rotate about the hinged connection. The hinged connection can either be at an edge of the panel parallel to the roof 106 so that the panel can be moved upwards or downwards, as described in connection with FIG. 6A, or the hinged connection can be at an edge of the panel parallel to the third and fourth walls 104c, 104d so that the panel can moved outwards or inwards. In other aspects, each access panel 126a, 126b may be a plurality of panels attached along a length so that the access panel 126a, 126b can be received along tracks within the interior of the roof 106 when opened.

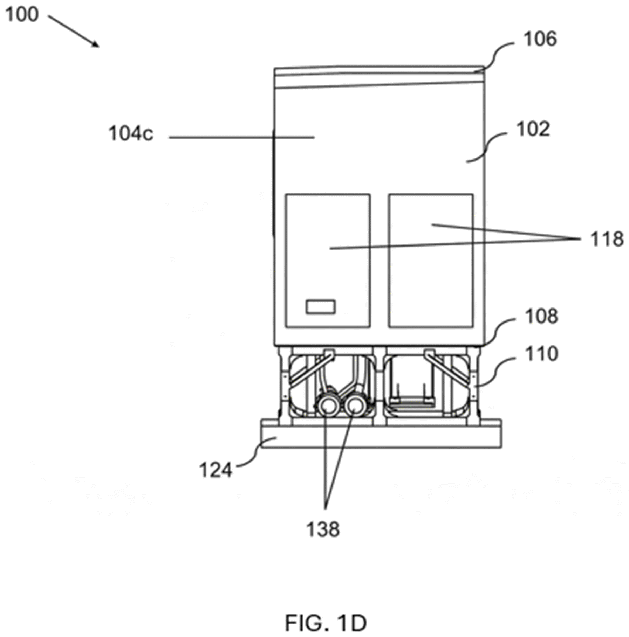

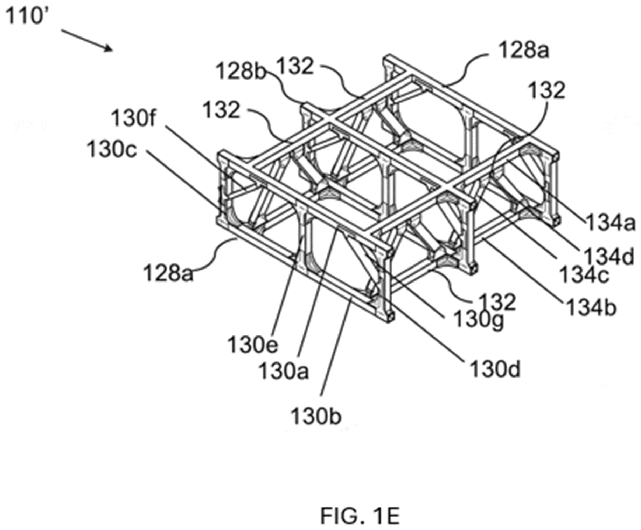

FIG. 1D illustrates the example individual containerized unit 100 with a focus on the base 110, and FIGs. 1E-1G illustrate a portion of the base 110. The base 110 may include openings to support one or more services, as detailed below. The services may include coolant supply and return piping, power conduits and power cables, controls wiring, and fiberoptic conduit and fiberoptic cables. In some examples, the coolant may be process-chilled water.

The base 110 may be made from light gauge steel framing, which are structural steel sheets formed into shapes. The process of making the light gauge steel framing may be press-braking blanks sheared from sheets or coils or by roll-forming the steel through a series of dies.

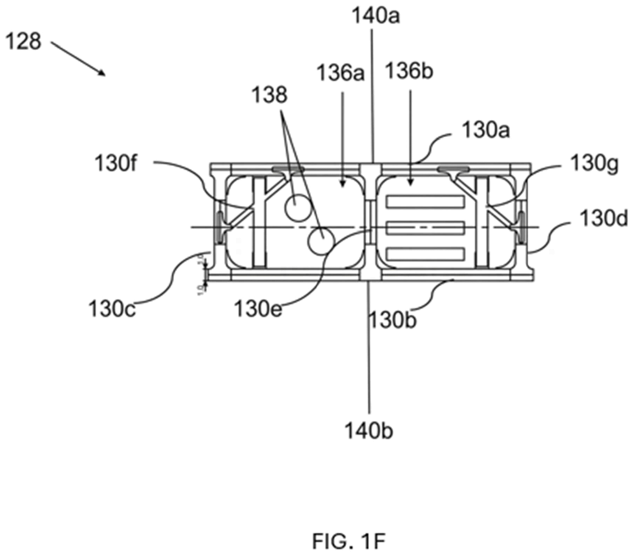

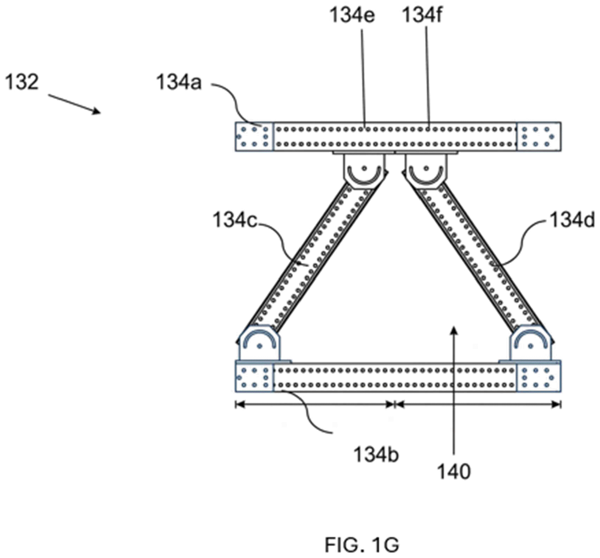

As shown in FIG. 1E, the base 110 may include several rectangular frames 128a, 128b and triangular frames 132, as detailed further in connection with FIGs. 1F and 1G. The base 110 may include three rectangular frames 128a, 128b and four triangular frames 132. However, in other aspects, the base 110 may include any number of rectangular frames 128a, 128b and triangular frames 132 for a target length and width of the base 110.

Each triangular frame 132 may be perpendicular to each rectangular frame 128a, 128b, each triangular frame 132 may be parallel to each other, and each rectangular frame 128a, 128b may be parallel to each other. Each external rectangular frame 128a may be attached to two triangular frames 132 at each end, and each internal rectangular frame 128b may be attached to four triangular frames 132, two on either side of each end.

As shown in FIG. 1F, a portion of the base 110 may include the rectangular frame 128 with a first edge 130a, a second edge 130b, a third edge 130c, and a fourth edge 130d. The first edge 130a may include a first midpoint 140a, which may be located at a center of the first edge 130a. The second edge 130b may include a second midpoint 140b, which may be located at a center of the second edge 130b. However, in other aspects, the first and second midpoints may be located anywhere along the first and second edges 130a, 130b.

A fifth edge 130e may connect to the first and second midpoints 140a, 140b so as to define a first opening 136a and a second opening 136b within the rectangular frame 128. A first support 130f may connect the third edge 130c to a point on the first edge 130a between the third edge 130c and the fifth edge 130e, and a second support 130g may connect the fourth edge 130d to a point on the first edge 130a between the fourth edge 130d and the fifth edge 130e.

As shown in FIG. 1G, a portion of the base 110 may also include the triangular frame 132 with a sixth edge 134a, a seventh edge 134b, a third support 134c, and a fourth support 134d. The sixth edge 134a and seventh edge 134b may be parallel to each other. The sixth edge 134a may include a first point 134e adjacent to and on one side of a center of the sixth edge 134a, and the sixth edge 134a may also have a second point 134f adjacent to and on the other side of the center. The third support 134c may connect one end of the seventh edge 134b to the first point 134e, and the fourth support 134d may connect the other end of the seventh edge 134b to the second point 134f. The seventh edge 134b, the third support 134c, and the fourth support 134d may define a triangular opening 140.

Any one of coolant supply and return piping 138, power conduits and power cables, controls wiring, and/or fiberoptic conduit and fiberoptic cables may be placed through the first opening 136a in the rectangular frame 128a, 128b so that piping 138 is positioned parallel to the triangular frames 132. However, in other aspects, coolant supply and return piping, power conduits and power cables, controls wiring, and/or fiberoptic conduit and fiberoptic cables may be inserted into any of the openings within base 110.

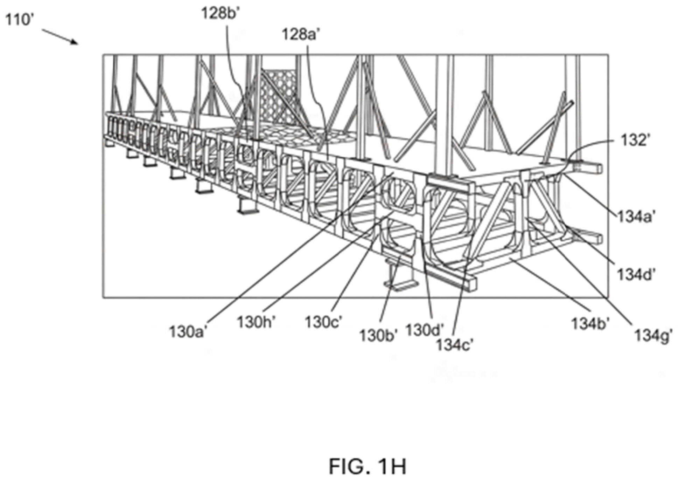

FIGs. 1H-1I illustrate another example base 110'. Base 110' is similar to base 110 of FIGs. 1A-1G. Therefore, like elements include similar numerals within the 100'-series of numbers. The description of identical features is omitted for brevity, and the following focuses on the differences between base 110 and base 110'.

Each triangular frame 132' may be perpendicular to each rectangular frame 128a', 128b', each triangular frame 132' may be parallel to each other, and each rectangular frame 128a', 128b' may be parallel to each other. Each triangular frame 132' may be attached to two rectangular frames 128a', 128b' at each end, and each internal triangular frame 132' may be attached to four rectangular frames 128a', 128b', two on either side of each end. There may be one row of triangular frames 132' and twenty columns of rectangular frames 128a', 128b'. Additionally, the rectangular frames 128a', 128b' may be in a repeating pattern of one second rectangular frame 128b' and then four first rectangular frames 128a', as described below. However, in other aspects, there may be any number of rectangular frames 128a', 128b' and triangular frames 132'.

Triangular frame 132' differs from triangular frame 132 in that it may include a third support 134g' between the third support 134c' and fourth support 134d'. The third support 134g' may be perpendicular to third edge 134a' and fourth edge 134b'.

First rectangular frame 128a' differs from rectangular frame 128 in that it may include only a first edge 130a', a second edge 130b', a third edge 130c', and a fourth edge 130d'. The first edge 130a' may be parallel to the second edge 130b', the third edge 130c' may be parallel to the fourth edge 130d', and the first and second edges 130a', 130b' may be perpendicular to the third and fourth edges 130c', 130d'. Second rectangular frame 128b' may also include a first support 130h' connecting the third edge 130c' and the fourth edge 130d'.

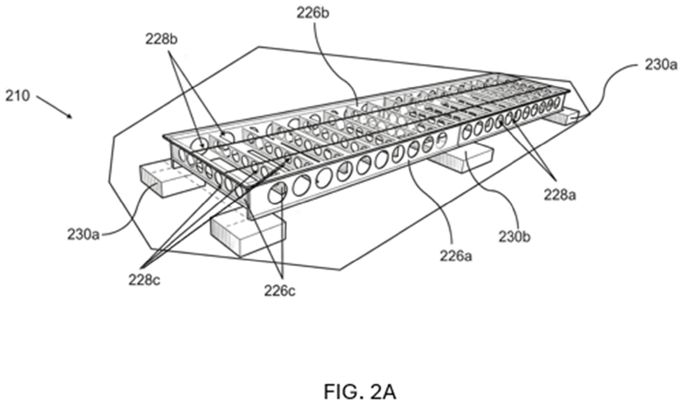

FIGs. 2A-2D illustrate another example base 210. Like base 110, base 210 may be positioned beneath a floor plate of an individual containerized unit, may function to provide integrated structural and conveyance support, and may be made from structural steel. Additionally, like base 110, base 210 may support one or more services, such as coolant supply and return piping, power conduits and power cables, controls wiring, and/or fiberoptic conduit and fiberoptic cables. Unlike base 110, base 210 may include circular openings throughout a series of intersecting beams. Though the base 210 is described for use in an individual containerized unit, the base 210 can be used for any type of building.

As shown in FIG. 2A, the base 210 may include a first beam 226a parallel to a second beam 226b, both defining the length of the base 210. The first beam 226a may have a first plurality of openings 228a, and the second beam 226b may have a second plurality of openings 228b. The first and second plurality of openings 228a, 228b may be circular, parallel to each other, and equally spaced apart.

The base 210 may also include one or more internal beams 226c extending between the first and second beams 226a, 226b and positioned between each of the first and second plurality of openings 228a, 228b on the first and second beams 226a, 226b. Though FIG. 2A includes seventeen internal beams 226c, the base 210 may include any number of internal beams depending on the length of and number of openings on the first and second beams 226a, 226b. Each internal beam 226c may include an internal plurality of openings 228c, which may also each be circular, parallel to each other, and equally spaced apart.

However, in other aspects, the first, second, and internal plurality openings 228a, 228b, 228c may be any shape and may be positioned anywhere on the beams 226a, 226b, 226c. For example, instead of cellular beams, the beams may be castellated.

Coolant supply and return piping 232 may be positioned within corresponding internal openings 228c of the internal beams 226c so that the piping 232 is positioned parallel to the first and second beams 226a, 226b. Power conduits and power cables, controls wiring, and/or fiberoptic conduit and fiberoptic cables may be positioned within the first and second plurality of openings 228a, 228b so that these components are positioned transverse to the first and second beams 226a, 226b. However, as stated above, in other aspects, coolant supply and return piping 232, power conduits and power cables, controls wiring, and/or fiberoptic conduit and fiberoptic cables may be inserted into any of the openings within base 210.

Rather than a singular base support, a plurality of foundations 230a, 230b may be positioned below the base 210. Foundation 230a, 230b may each be a structural base positioned below the base 210 to support the weight of individual containerized unit 200 and to ensure long-term structural stability. For example, foundation 230a, 230b may be a reinforced concrete slab or a deep pier system. A first set of foundations 230a may be positioned at each corner of the base 210. Specifically, the first set of foundations 230a may be four foundations at each corner positioned so that a center of each foundation 230a is underneath each corner. Additionally, a second set of foundations 230b may be placed between the corners of the base 210. Specifically, the second set of foundations 230b may be two foundations underneath the first and second beams 226a, 226b and parallel to the internal beams 226c. However, in other aspects, the foundations 230a, 230b may have any length, width, and height that supports the weight of base 210.

The base 210 may be connected to a floor plate 208. Like floor plate 108, floor plate 208 may include concrete, wood including but not limited to glulam, engineered wood or oriented strand board (OSB), metal alloys including but not limited to aluminum alloys or titanium alloys, steel including but not limited to stainless steel or galvanized steel, high performance plastics including but not limited to PEEK or nylon carbon fiber, copper, stone, glass fiber reinforced polymers, fiber-reinforced polymers (FRP), or a mixture thereof. However, the floor plate may include any material that supports the weight of an individual containerized unit.

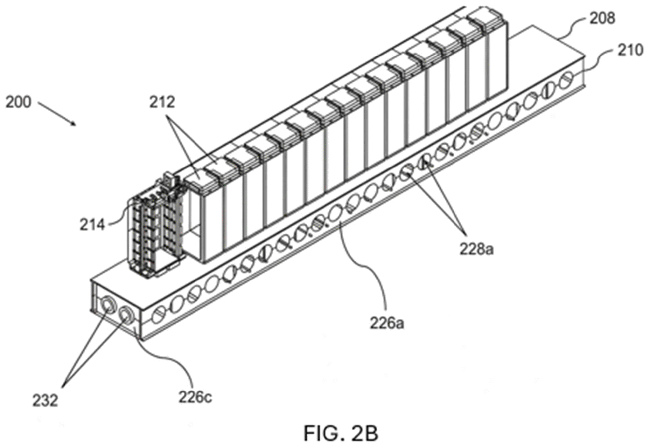

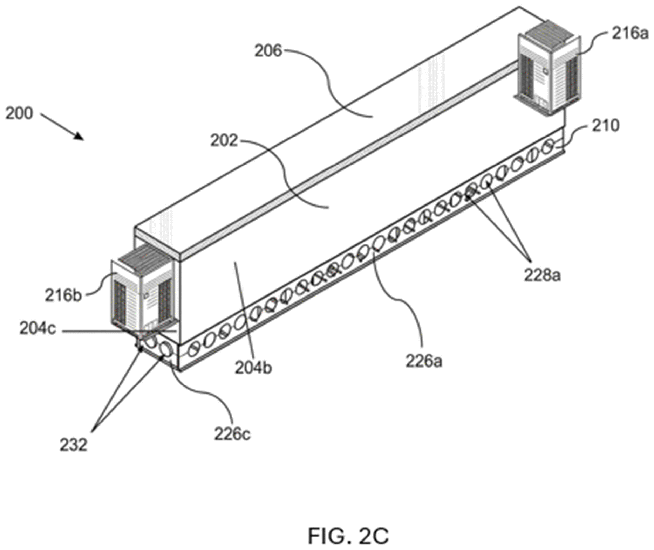

FIGs. 2B and 2C illustrate portions of an example individual containerized unit 200. Individual containerized unit 200 is similar to individual containerized unit 100 of FIGs. 1A-1G. Therefore, like elements include similar numerals within the 200-series of numbers. The description of identical features is omitted for brevity, and the following focuses on the differences between individual containerized unit 200 and individual containerized unit 100.

Individual containerized unit 200 differs in that it may include the base 210 of FIG. 2A. Thus, coolant supply and return piping 232 may be within the plurality of internal openings 228c of the internal beams 226c so that the piping 232 is positioned parallel to the first and second beams 226a, 226b.

Individual containerized unit 200 also differs in that it may include one row of fifteen racks 212 along the floor plate. However, as stated above, there may be any number of rows of racks 212 depending on the width of the base 210, and there may be any number of columns of racks 212 depending on the length of the base 210.

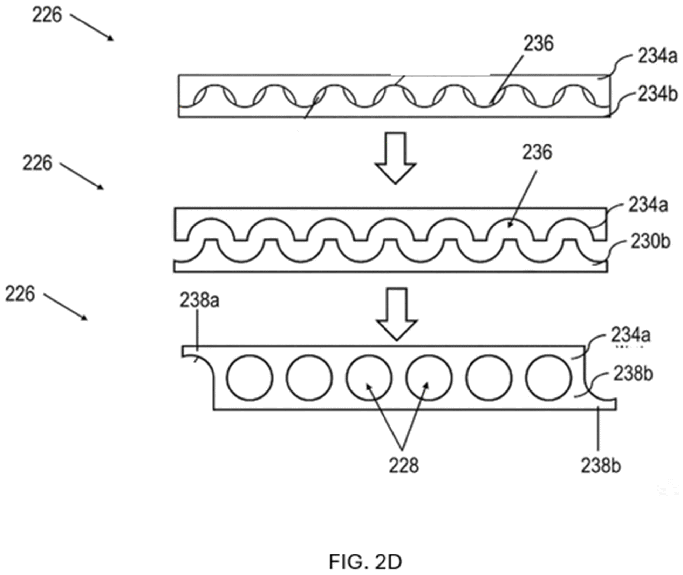

FIG. 2D illustrates an example method of making the beams 226 (such as the first beam 226a, the second beam 226b, and the internal beams 226c) of the base 210 of FIGs. 2A-2C. As shown in FIG. 2D, a method may include first cutting the beam 226 along a sinousidal cut line 236 to form a first portion 234a and a second portion 234b. The cut line 236 may include peaks of equivalent height. The first portion 234a and the second portion 234b may be translated relative to each other until the edge of the first and second portions 236a, 234b cut along the cut line 236 define a plurality of openings 228. As a result of translating the first and second portions 234a, 234b relative to each other, the first portion 234a may include a first removable portion 238a, and the second portion 234b may include a second removable 238b at an end diagonal to the first removable portion 238a. The first and second removable portions 238a, 238b may be removed so that the beam 226 has a rectangular outer shape.

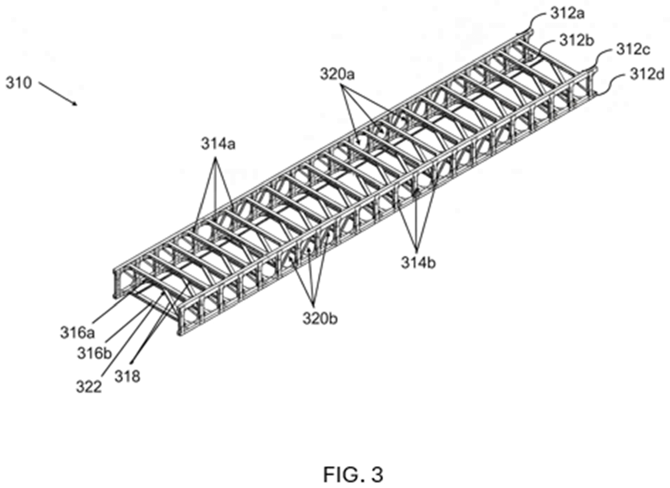

FIG. 3A illustrates another example base. Like bases 110, 110', 210, base 310 may be positioned beneath a floor plate of an individual containerized unit, may function to provide integrated structural and conveyance support, and may be made from structural steel. Additionally, like bases 110, 110', 210, base 310 may support one or more services, such as coolant supply and return piping, power conduits and power cables, controls wiring, and/or fiberoptic conduit and fiberoptic cables. However, the structure of base 310 differs from the structures of bases 110, 110' 210. Though the base 310 is described for use in an individual containerized unit, the base 310 can be used for any type of building.

The base 310 may include a first edge 312a, a second edge 312b, a third edge 312c, and a fourth edge 312d. The first edge 312a and the second edge 312b may be connected to each other by a first plurality of equally spaced length connectors 314a. The first edge 312a, the second edge 312b, and the first plurality of length connectors 314a may define a first plurality of openings 320a. Similarly, the third edge 312c and the fourth edge 312d may be connected to each other by a second plurality of equally spaced length connector 314b. The third edge 312c, the fourth edge 312d, and the second plurality of length connectors 314b may define a second plurality of openings 320b.

The first edge 312a and the third edge 312c may be connected between each of the plurality of length connectors 314a, 314b through a first plurality of width connectors 316a. Similarly, the second edge 312b and the fourth edge 312d may be connected between each of the plurality of length connectors 314a, 314b through a second plurality of width connectors 316b. The first and second width connectors 316a, 316b may define a third opening 322.

The second plurality of width connectors 316b may be connected by a series of supports 318 at an end of one width connector 316b closest to the fourth edge 312d and a middle of an adjacent width connector 316b.

Coolant supply and return piping may be positioned within the third opening 322 between the first and second plurality of width connectors 316a, 316b so that the piping is positioned parallel to the first, second, third, and fourth edges 312a, 312b, 312c, 312d. Power conduits and power cables, controls wiring, and/or fiberoptic conduit and fiberoptic cables may be positioned within the first and second plurality of openings 320a, 320b so that these components are positioned transverse to the first, second, third, and fourth edges 312a, 312b, 312c, 312d. However, as stated above, in other aspects, coolant supply and return piping, power conduits and power cables, controls wiring, and/or fiberoptic conduit and fiberoptic cables may be inserted into any of the openings within base 310.

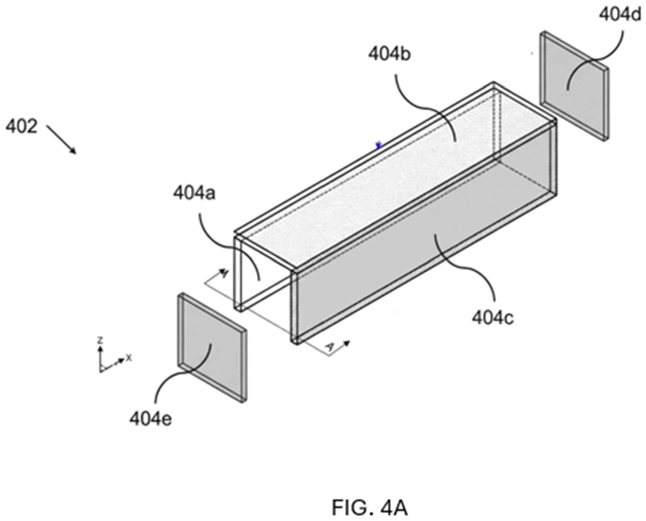

FIGs. 4A-4C illustrate an example flat-packed enclosure 402. Individual containerized unit 100, 200 may include the enclosure 402 instead of the enclosures 102, 202. Like enclosures 102, 202, the enclosure 402 may house the interior components of an individual containerized unit and may have a rectangular shape when assembled. Though the enclosure 402 is described for use in a modular data center, the enclosure 402 can be used for any type of building.

As shown in FIG. 4A, the flat-packed enclosure 402 may include a first panel 404a, a second panel 404b, a third panel 404c, a fourth panel 404d, and a fifth panel 404e. The first, third, fourth, and fifth panels 404a,c-e may each be a wall of an individual containerized unit, and the second panel 404b may be a ceiling of the individual containerized unit. Each panel 404a-e may have an internal side intended to face the components of the individual containerized unit when assembled and an external side intended to face away from the components of the individual containerized unit when assembled.

The panels 404a-e may be structural insulated panels (SIPs), which may include combined framing, insulation, and sheathing. For example, the SIPs panels 404a-e may include an insulated foam core between two structural facings. The insulated core may include EPS, XPS, polyurethane, or polyisocyanurate. The structural facings may each be an oriented strand board (OSB) or fiber-reinforced polymers (FRP). These materials may result in minimized material consumption and lower overall carbon footprint. In other aspects, the panels 404a-e can include concrete, wood including but not limited to glulam or engineered wood, metal alloys including but not limited to aluminum alloys or titanium alloys, steel including but not limited to stainless steel or galvanized steel, high performance plastics including but not limited to PEEK or nylon carbon fiber, copper, stone, glass fiber reinforced polymers, or a mixture thereof.

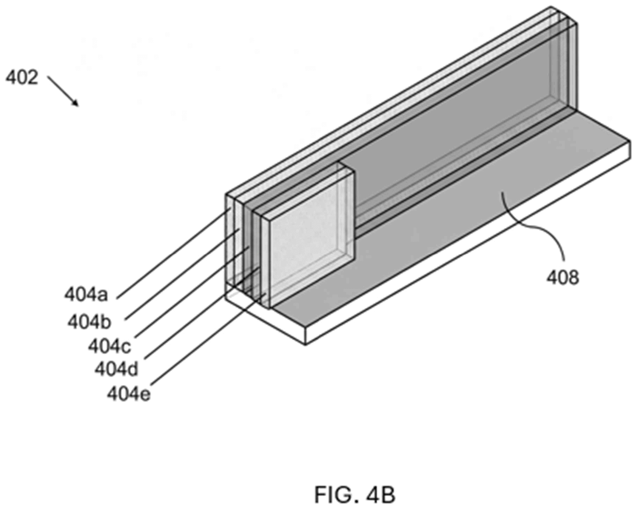

As shown in FIG. 4B, when in an unassembled position, each panel 404a-e may be stacked side-by-side. The first panel 404a, the second panel 404b, and the third panel 404c may be hingedly connected. Specifically, a length of the first panel 404a may be hingedly connected to a length of the second panel 404b, and a length of the third panel 404c may be hingedly connected to the other length of the second panel 404b. As such, in an unassembled position, an internal surface of the first panel 404a may face an internal surface of the second panel 404b, and an external surface of the second panel 404b may face an external surface of the third panel 404c.

In other aspects, the first, second, and third panels 404a-c may be separated from each other and connected through pre-engineered connection systems during assembly. The pre-engineered connection systems may be interlocking mechanisms, bolts, and/or specialized fasteners. As such, assembling the enclosure 402 may not require welding or other complex on-site fabrication.

The panels may be connected to a floor plate 408. Like floor plate 108, 208, floor plate 408 may include concrete, wood including but not limited to glulam, engineered wood or oriented strand board (OSB), metal alloys including but not limited to aluminum alloys or titanium alloys, steel including but not limited to stainless steel or galvanized steel, high performance plastics including but not limited to PEEK or nylon carbon fiber, copper, stone, glass fiber reinforced polymers, fiber-reinforced polymers (FRP), or a mixture thereof. Floor plate 408 may be hingedly connected to a length of the first panel 404a opposite to the length connected to the second panel 404b. In other aspects, the floor plate 408 may be separated from the enclosure 402.

The fourth panel 404d and fifth panel 404e may be separated from the first, second, and third panels 404a-c and from the floor plate 408. As such, the fourth panel 404d and fifth panel 404e may be placed against an internal side of the third panel 404c. The fourth panel 404d and fifth panel 404e may be placed side-by-side. However, the fourth panel 404d and fifth panel 404e may be placed in any position.

The enclosure 402 may be sized and shaped to fit in a transportation vehicle so that the enclosure 402 can be shipped to a designated location. For example, the first panel 404a, second panel 404b, and third panel 404c may have a length ranging from 47 to 53 feet, a width ranging from 7 feet and 6 inches to 8 feet, and a height ranging from 12 to 14 feet. The fourth panel 404d and fifth panel 404e may have a length and height ranging from 12 to 14 feet, depending on the dimensions of the first, second, and third panels 404a-404c, and a width ranging from 7 feet and 6 inches to 8 feet. However, each panel can have any length, width, and height to house components of a data center.

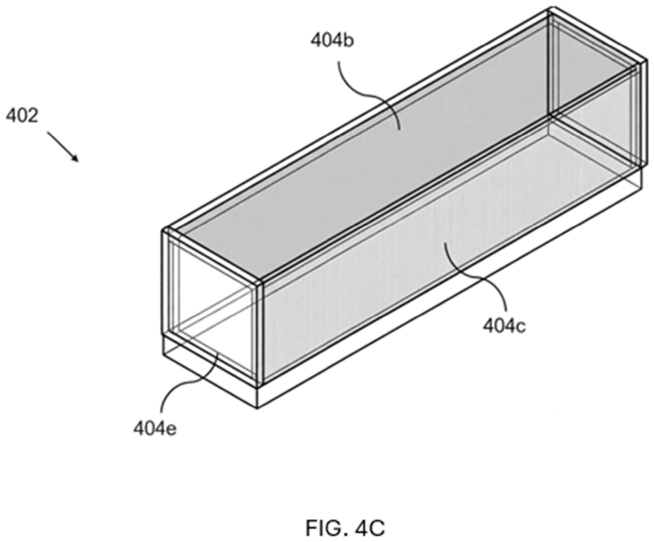

As shown in FIG. 4C, when in an assembled position, the first panel 404a may be parallel to the second panel 404b, the third panel 404c may be parallel to the floor plate 408, and the fourth panel 404d may be parallel to the fifth panel 404e so to form a rectangular shape.

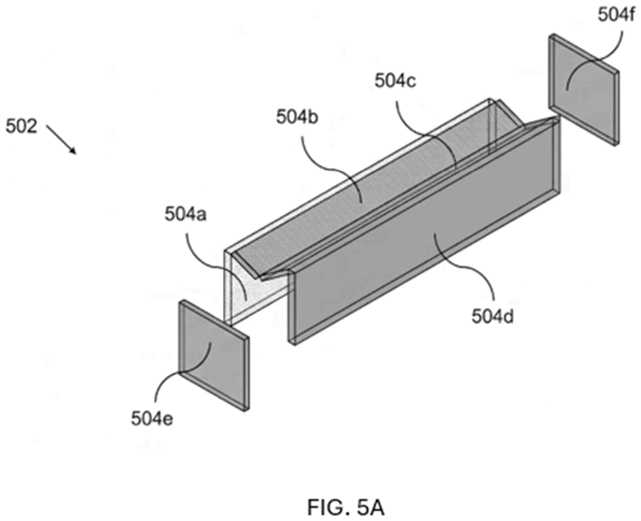

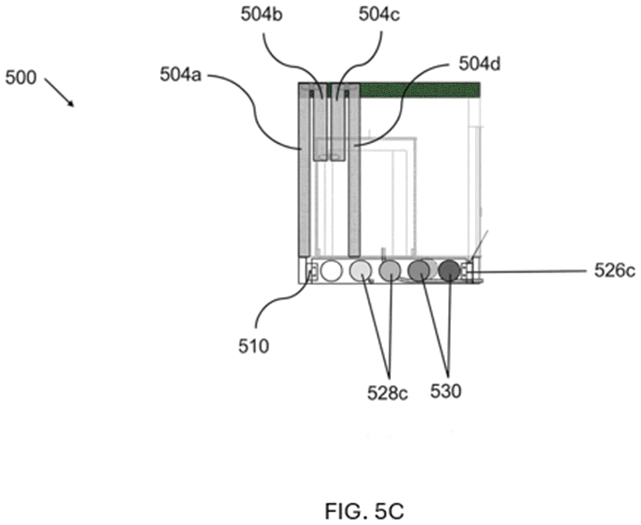

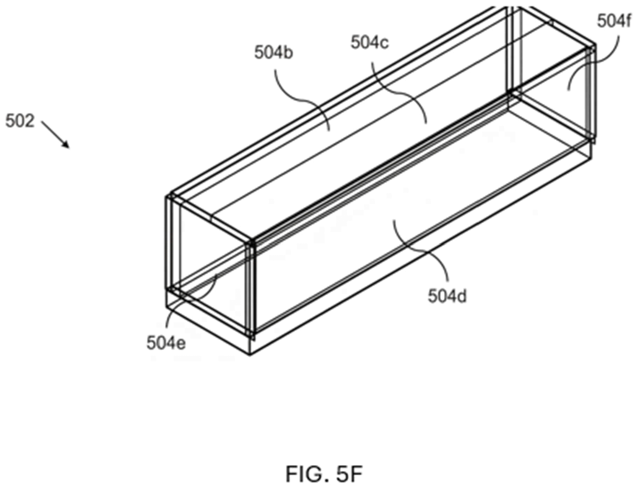

FIGs. 5A-5F illustrate an example foldable enclosure 502. Individual containerized unit 100, 200 may include the enclosure 502 instead of the enclosures 102, 202, 402. Like enclosures 102, 202, 402, the enclosure 502 may house the interior components of an individual containerized unit and may have a rectangular shape when assembled. Though the enclosure 502 is described for use in a modular data center, the enclosure 502 can be used for any type of building.

As shown in FIG. 5A, the foldable enclosure 502 may include a first panel 504a, a second panel 504b, a third panel 504c, a fourth panel 504d, a fifth panel 504e, and a sixth panel 504f. The first, fourth, fifth and sixth panels 504a,d-f may each be a wall of the individual containerized unit, and the second and third panels 504b, 504c may form a ceiling of the individual containerized unit. Each panel 504a-f may have an internal side that faces the components of the unit when assembled and an external side that faces away from the components of the unit when assembled. The panel materials may include SIPs or FRPs, as described in connection with FIG. 4A.

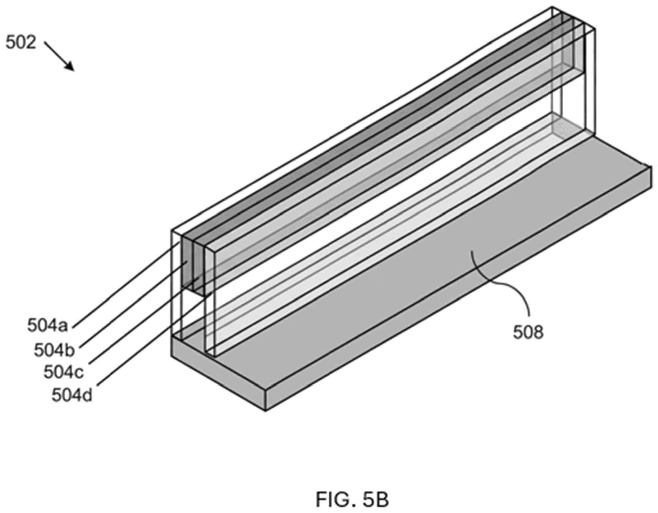

As shown in FIGs. 5B-5C, when in an unassembled position, each panel 504a-f may be stacked side-by-side. The first panel 504a, the second panel 504b, the third panel 504c, and the fourth panel 504d may be hingedly connected. Specifically, a length of the first panel 504a may be hingedly connected to a length of the second panel 504b, a length of the third panel 504c may be hingedly connected to a free length of the second panel 504b, and a length of the fourth panel 504d may be hingedly connected to a free length of the third panel 504c. Any one of the hinged connections may be, for example, a piano hinge which are continuous and have a longer length than traditional hinges, an industrial style hinge, or a combination thereof. When industrial hinges are used, they may be equidistantly spaced.

As such, in the unassembled position, an internal surface of the first panel 504a may face an internal surface of the second panel 504b, an external surface of the second panel 504b may face an external surface of the third panel 504c, and an internal surface of the third panel 504c may face an internal surface of the fourth panel 504d.

In other aspects, the first, second, third panel, and fourth panels 504a-d may be separated from each other and connected through pre-engineered connection systems during assembly. The pre-engineered connection systems may be interlocking mechanisms, bolts, and/or specialized fasteners. As such, assembling the enclosure 502 may not require welding or other complex on-site fabrication.

The panels may be connected to a floor plate 508. For example, floor plate 508 may be hingedly connected to a free length of the first panel 504a 504a. In other aspects, floor plate 508 may be separated from the enclosure 502.

The floor plate 508 may be connected to base 510. The base 510 may have cellular beams as detailed in connection with base 210 in FIGs. 2A-2D. As such, piping 530 may be positioned in two of a plurality of internal openings 528c in a plurality of internal beams 526c.

The fifth panel 504e and the sixth panel 504f may be separated from the first, second, third, and fourth panels 504d and from the floor plate 508. Though not shown, the fifth panel 504e and the sixth panel 504f may be placed against an external side of the fourth panel 504d. The fifth panel 504e and the sixth panel 504f may be placed side-by-side. However, the fifth panel 504e and the sixth panel 504f may be placed in any position.

The foldable enclosure 502 may be sized and shaped to fit in a transportation vehicle so that the enclosure 502 can be shipped to a designated location. For example, the first panel 504a, second panel 504b, and a combination of the third panel 404c and the fourth panel 404d may have a length ranging from 47 to 53 feet, a width ranging from 7 feet and 6 inches to 8 feet, and a height ranging from 12 to 14 feet. The fifth panel 404e and sixth panel 404f may have a length and height ranging from 12 to 14 feet, depending on the dimensions of the first, second, and the combination of the third and fourth panels 404a-404d, and a width ranging from 7 feet and 6 inches to 8 feet. However, each panel can have any length, width, and height to house components of a data center.

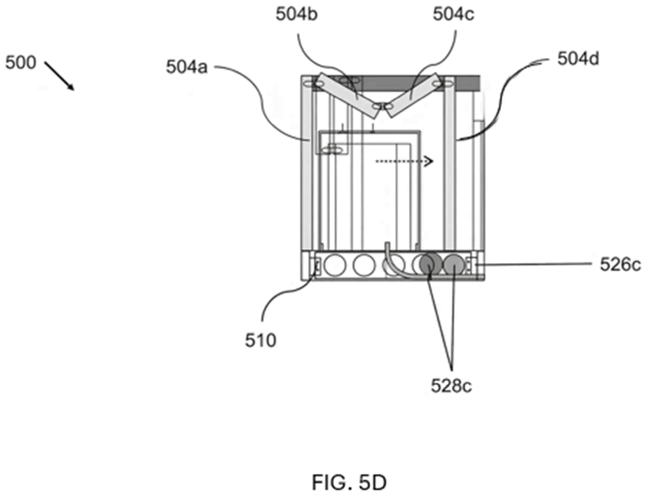

FIG. 5D illustrates the enclosure 502 in an intermediate position. In the intermediate position, the fourth panel 504d may be moved away from the first panel 504a so that an angle between the first and second panels 504a, 504b increases and an angle between the third and fourth panels 504c, 504d increases. When the angles between the first and second panels 504a, 504b and between the third and fourth panels 504c, 504d is 90 degrees, the enclosure 502 may be in an assembled position.

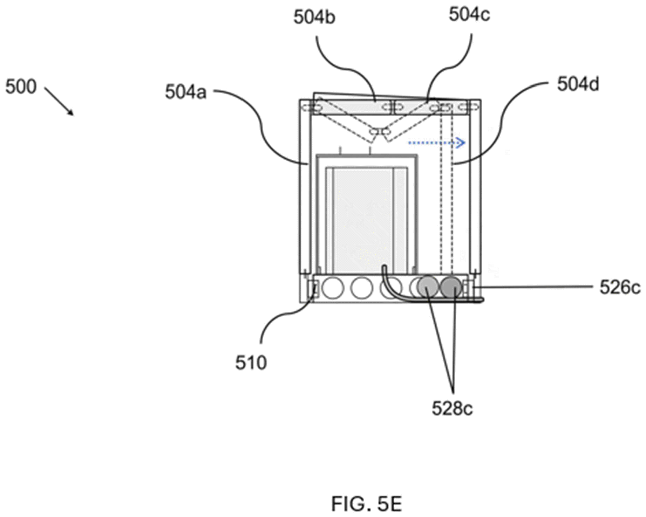

FIGs. 5E-5F illustrate the enclosure 502 in an assembled position. The first panel 504a may be parallel to the third panel 504c, the second and third panels 504b, 504c may be parallel to the floor plate 508, and the fifth panel 504e may be parallel to the sixth panel 504f so to form a rectangular shape.

FIGs. 6A-6D illustrate an example individual containerized unit 600. The individual containerized unit 600 is similar to the individual containerized unit 100 of FIGs. 1A-1G. Therefore, like elements include similar numerals within the 600-series of numbers. The description of identical features is omitted for brevity, and the following focuses on the differences between individual containerized unit 600 and individual containerized unit 100.

As shown in FIG. 6A, access panels 626 differ from access panels 126a, 126b in that each access panel 626 may include a first portion 625 and a second portion 627. The first portion 625 may be connected to a first edge closest to and parallel to the roof 606. The second portion 627 may be connected to a second edge farthest from and parallel to the roof 606. In a closed position, the first and second portions 625, 627 may be positioned parallel to the first wall 604a. In an opened position, the first and second portions 625, 627 may be positioned transverse to the first wall 604a. The connection may be hinged, but can be any type of connection that enables both portions 625, 627 to be moved. There may be three access panels 626' on the first wall 604a and three access panels 626' on the second wall (not shown). However, in other aspects, there may be any number of access panels on any of the walls of the individual containerized unit 600.

Like bases 110, 110', 210, 310, base 610 may be positioned beneath a floor plate of an individual containerized unit, may function to provide integrated structural and conveyance support, and may be made from structural steel. Additionally, like base 110, 110', 210, 310, base 610 may support one or more services, such as coolant supply and return piping, power conduits and power cables, controls wiring, and/or fiberoptic conduit and fiberoptic cables. However, the structure of base 310 differs from the structures of 110, 110', 210, 310. Though the base 310 is described for use in a modular data center, the base 610 can be used for any type of building.

As shown in FIGs. 6A-6B, base 610 differs from base 110 in that base 610 includes a first edge 630a parallel to a second edge 630b, which may be both parallel to roof 606 and positioned under the first wall 604a. A third edge (not shown) and a fourth edge (not shown) may be parallel to the first and second edges 630a, 630b and positioned under the second wall (not shown), which is opposite to the first wall. The first and second edges 630a, 630b may be connected by a first series of width connectors 630c, which may be transverse to the roof 606. Similarly, the third and fourth edges may be connected by a second series of width connectors (not shown). The second edge 630b may be connected to the fourth edge (not shown) by a series of length connectors 630d. This design may be beneficial in that base 610 provides more space at a bottom of the modular data center, which may be used for coolant supply and return piping, power conduits and power cables, controls wiring, and/or fiberoptic conduit and fiberoptic cables.

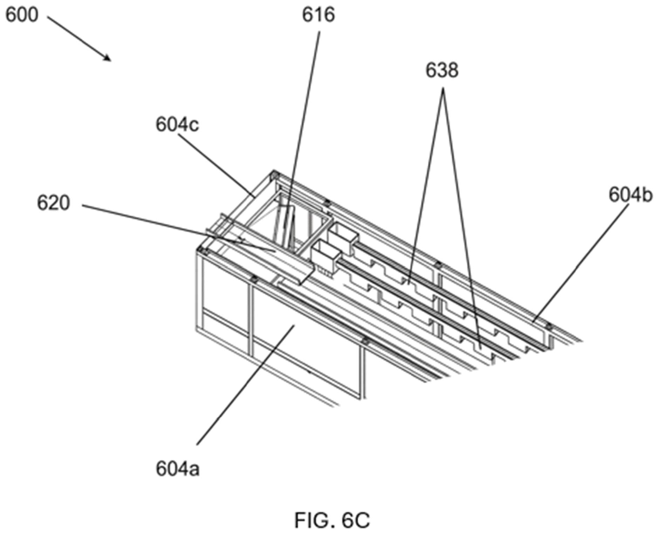

As shown in FIG. 6C, the interior of the individual containerized unit 600 may include a fiber tray 620 parallel to piping 638. The piping 638 may be connected to cooling unit 616.

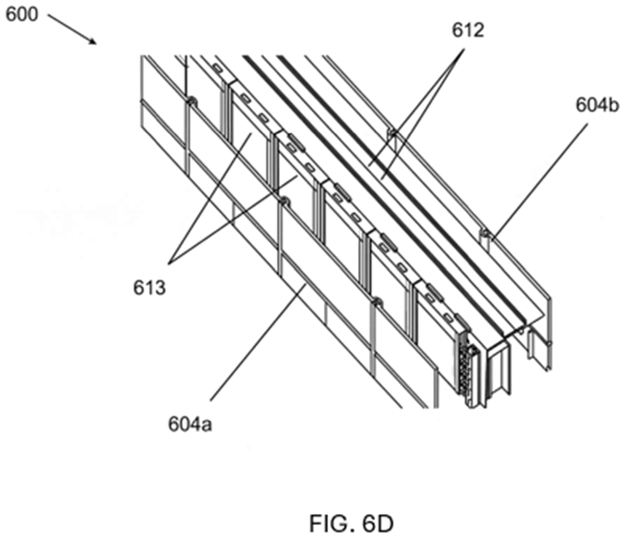

As shown in FIG. 6D, the interior of the individual containerized unit 600 may also include a series of AI racks 613. The AI racks 613 may be positioned perpendicular to data center racks 112, but can be positioned anywhere in the interior. The AI racks 613 may include a high-performance graphical processing unity (GPU), which may be designed for accelerating AI and ML tasks.

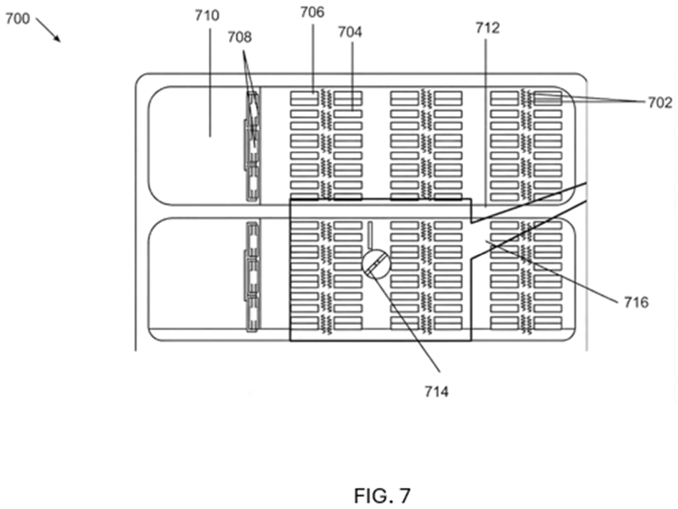

FIG. 7 illustrates an example layout of a data center site 700. The data center site may include individual containerized units 702. The individual containerized units 702 may be individual containerized units 100, 100', 200, 500, 600, and/or 1000 described herein. The individual containerized units 702 may also include any of the components of individual containerized units described above, such as enclosures 102, 202, 402, 502, 1002 and/or bases 110, 110', 210, 310, 510, 610.

Each set of individual containerized units 702 may be positioned in two columns and five rows for a total of ten individual containerized units 702. There may be three columns and two rows of each set of individual containerized units 702 for a total of sixty individual containerized units 702 in the site 700. However, there may be any number of columns and rows of individual containerized units in each set, and any number of columns and rows of sets of individual containerized units, depending on the need of the site.

Data center site 700 may eliminate several components from traditional data center sites because data center site 700 may include microgrids for on-site energy production and may remove the need for freshwater. For example, the main data center building including office space may be eliminated since the data center site 700 may be designed not to require on-site personnel. Further, a dedicated space for fans may be eliminated because cooling means may be integrated into the individual containerized unit 702, such as fans (not shown) on top of each individual containerized unit 702. Additionally, dedicated electrical and/or mechanical yards may be eliminated due to a highway system to deliver services to and from each individual containerized unit.

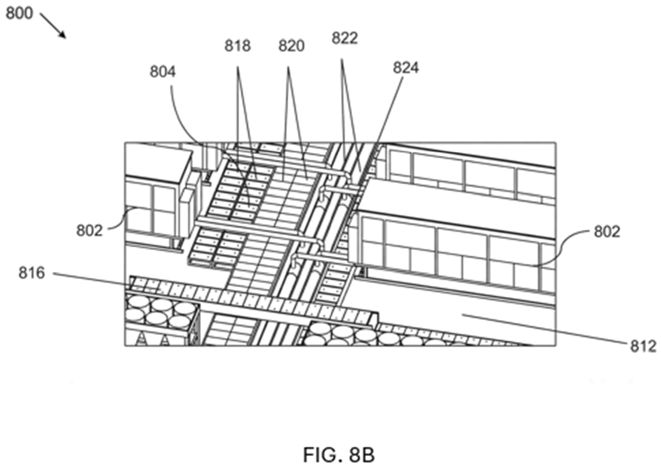

The highway system 704 may be positioned transverse to the longest walls of the individual containerized units 702. The highway system 704 may include several services for the individual containerized units 702. For example, the services may include medium-voltage power lines, low-voltage power lines, piping, and/or fiberoptic cables, as described in connection with FIG. 8B. In other aspects, the highway system 704 may be positioned anywhere relative to individual containerized units 702 that enables services to and from the individual containerized units 702. The data center site layout is customizable with infinite permutations because the highway system 704 is not limited in shape or total length. As such, mechanical, electrical, and rack equipment can be organized in any layout, which can be beneficial based on the available real estate.

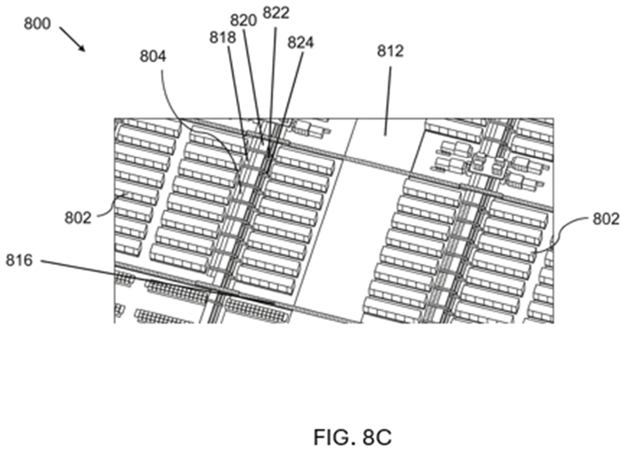

A second set of fiberoptic cables 716 may be positioned parallel to the longest walls of the individual containerized units 702. There may be a second set of fiberoptic cables 716 for each row of individual containerized units 702. The second set of fiberoptic cables is described further in connection with FIG. 8C.

Data center site 700 may support AI/ML workloads, which have increasing power demands as high-performance computing systems and thus require significant cooling. The design may include a network of piping between and underneath data centers to enable advanced liquid cooling technology, such as piping in the highway system 704, as described further in connection with FIG. 8B. Specifically, direct-to-chip cooling may be used to support the AI/ML workloads. Direct-to-chip cooling may include chips having cold plates with channels for coolant, which enables heat absorption from the chip surface. A coolant may be circulated through the system to maintain continuous heat removal. The coolant may be circulated through piping, such as piping described herein such as 138, 530, 638, 822, but may be circulated through any piping system. The piping system may be located underneath the individual containerized unit 702. The absorbed heat from the coolant may be transferred to an external cooling source. The external cooling source may be air cooling units 116a, 116b, 616, but can be any source that enables cooling.

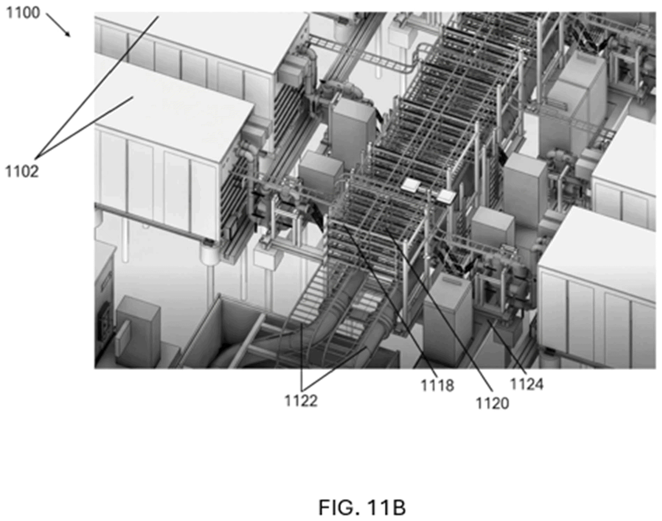

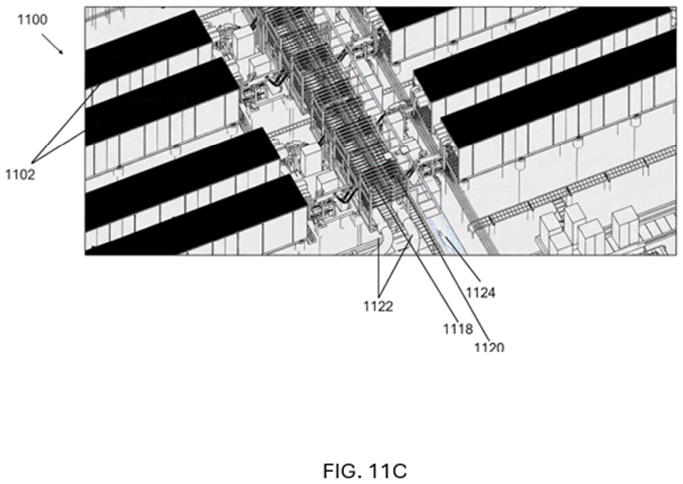

. In other examples, the piping may be routed through a side wall of the individual containerized units 702, such as detailed in connection with FIG. 11D.

A series of back-up generators 708 may be positioned parallel to the first row of individual containerized units 702 within a generator yard 710. However, the back-up generators 708 may be placed anywhere in the data center site 700. The back-up generators 708 may function to provide power to the individual containerized units 702 in the event of a power outage. In other aspects, the data center site 700 may not include back-up generators.

An access road 712 may be positioned around a perimeter of the site 700, between each column of sets of individual containerized units 702, and between the two rows of sets of individual containerized units 702. As such, a vehicle can access the perimeter and the space between the two rows. In other aspects, the access road may be positioned anywhere on the site 700 that requires access, for example, by a vehicle. In other aspects, the data center site 700 may not include an access road.

A motorized platform 714 may be positioned between two of the three columns of sets of individual containerized units 702. The motorized platform 714 may rotate such that a vehicle can be reoriented. The motorized platform 714 may enable a smaller space between columns by eliminating the need for a vehicle to manually reorient through a multiple-point turn. As such, the amount of required real estate is reduced. In other aspects, there may be any number of motorized platforms positioned anywhere in the site 700. In other aspects, the data center site 700 may not include a motorized platform.

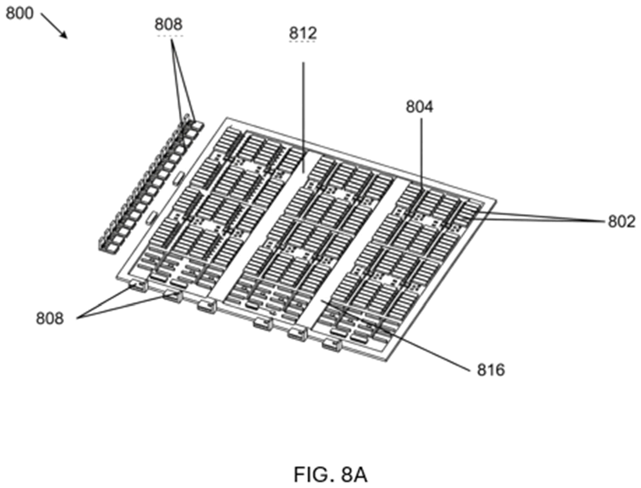

FIGs. 8A-8C illustrate an example layout of a data center site 800. Data center site 800 is similar to data center site 700 of FIG. 7. Therefore, like elements include similar numerals within the 800-series of numbers. The description of identical features is omitted for brevity, and the following focuses on the differences between data center site 800 and data center site 700.

As shown in FIG. 8A, data center site 800 differs in that each set of individual containerized units 802 may include eight total individual containerized units 802. There may be twelve columns and four rows of each set of individual containerized units 802 for a total of 384 individual containerized units 802 in the site 800. However, as stated above, there may be any number of columns and rows of individual containerized units in each set, and any number of columns and rows of sets of individual containerized units, depending on the need of the site.

Additionally, data center site 800 differs in that generators 808 are positioned adjacent to the first row of containerized units 802 and adjacent to the bottom column of containerized units 802. However, as stated above, the generators 808 may be placed anywhere in the data center site 800.

As shown in FIG. 8B, the highway system 804 may be positioned transverse to the shortest walls of the individual containerized units 802. There may be a highway system 804 between each column of containerized units 802. The highway system 804 may be placed above the ground, on the ground, or otherwise underground. For example, the highway system 804 may be within trenches, which may be a narrow excavation in the ground. Additionally, the highway system 804 can be placed anywhere in the data center site 800, enabling customization for infinite permutations.

The highway system 804 may include medium-voltage power lines 818, low-voltage power lines 820, piping 822, and a first set of fiberoptic cables 824. The medium-voltage power lines 818 may transport a voltage ranging from 500 volts to 14,000 volts, and the low-voltage power lines 820 may transport a voltage ranging from 300 volts to 500 volts. In this regard, 500 volts may be considered medium-voltage or low-voltage depending on the configuration of the highway system 804.The medium-voltage power lines 818, the low-voltage power lines 820, and the piping 822 may each be in two lanes. The first set of fiberoptic cables 824 may be in one lane. The medium-voltage power lines 818 may be adjacent to the low-voltage power lines 820, which may be adjacent to the piping 822, which may be adjacent to the first set of fiberoptic cables 824. However, the medium-voltage power lines 818, the low-voltage power lines 820, the piping 822, and the first set of fiberoptic cables 824 may be positioned in any order. The piping 822 may be routed underneath the individual containerized units 802. For example, the piping 822 can be routed through openings in a base, such as one of bases 110, 110', 210, 310, 510, 610. In other examples, the piping 822 may be routed through a side wall of the individual containerized units 802, such as detailed in connection with FIG. 11D.

As shown in FIG. 8C, a second set of fiberoptic cables 816 is positioned parallel to the longest side of the individual containerized units 802 and on either side of each set of individual containerized units 802. As such, several first and second sets of fiberoptic cables 816, 824 are perpendicular to each other so as to create a microgrid for on-site energy production.

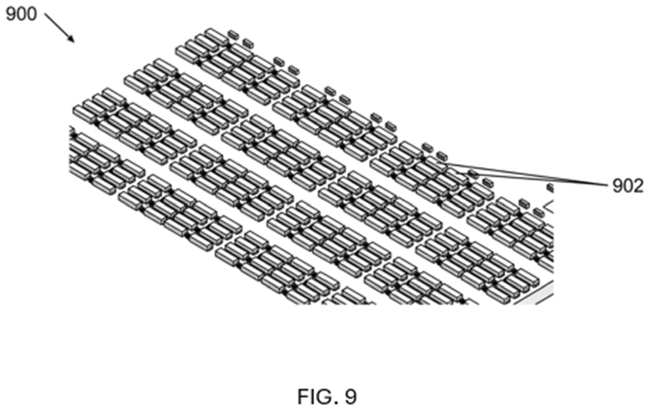

FIG. 9 illustrates another example layout of a data center site 900. Data center site 900 is similar to data center site 700 of FIG. 7. Therefore, like elements include similar numerals within the 900-series of numbers. The description of identical features is omitted for brevity, and the following focuses on the differences between data center site 900 and data center site 700.

Data center site 900 differs in that each set of individual containerized units 902 may be positioned in four columns and four rows for a total of sixteen individual containerized units 902. There may be four columns and four rows of each set of individual containerized units 902 for a total of 256 individual containerized units 902 in the site 900. However, as stated above, there may be any number of columns and rows of individual containerized units in each set, and any number of columns and rows of sets of individual containerized units, depending on the need of the site.

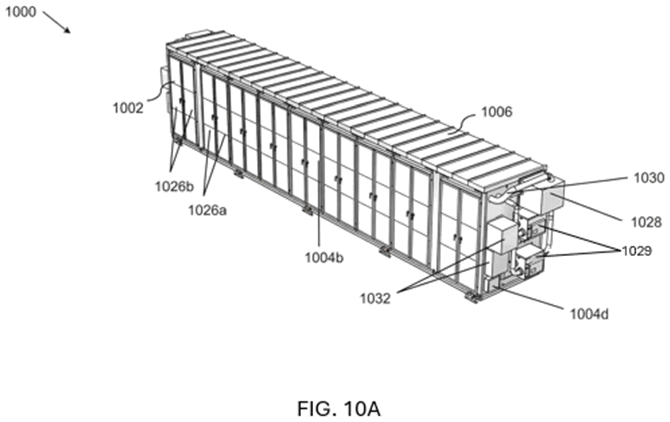

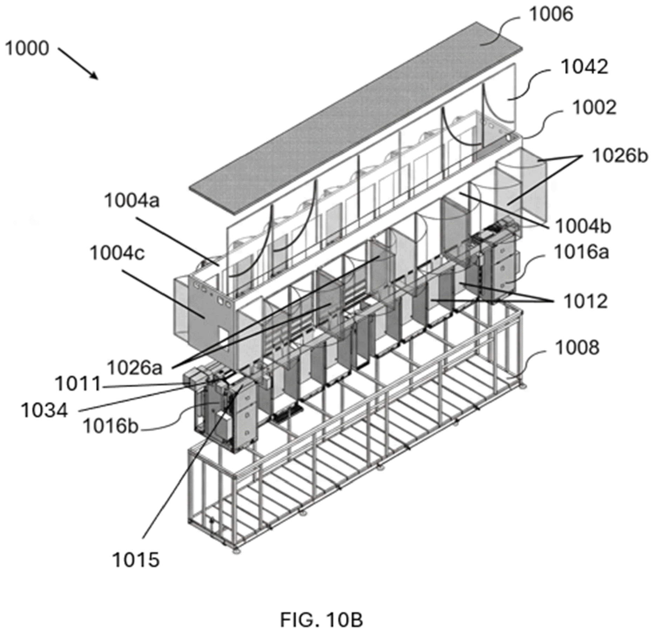

FIGs. 10A-10H illustrate another example individual containerized unit 1000. As shown in FIGs 10A-10D, the individual containerized unit 1000 may include an enclosure 1002, data center rack recesses 1012, access panels 1026a, 1026b, air cooling units 1016a, 1016b, electrical panels 118, control units 1032, and pressurization units 1028.

As shown in FIGs. 10A-10E, the enclosure 1002 may include a first wall 1004a, a second wall 1004b, a third wall 1004c, a fourth wall 1004d, a roof 1006, and a floor plate 1008. In other aspects, the enclosure 1002 may include walls and a roof, or may include walls coupled to a roof. The enclosure 1002 may house the interior components of the individual containerized unit 1000.

The enclosure 1002 may be a rectangular shape. As such, enclosure 1002 may include a first wall 1004a parallel to a second wall 1004b and a third wall 1004c parallel to a fourth wall 1004d. The first and second walls 1004a, 1004b may be perpendicular to the third and fourth walls 1004c, 1004d. Additionally, the first and second walls 1004a, 1004b may have a longer length than the third and fourth walls 1004c, 1004d.

The enclosure 1002 may be weatherproof and may include protection against dust and water ingress. The enclosure 1002 may include one or more of the materials described in connection with the enclosure 102 of FIGs. 1A-1B.

An interior within the enclosure 1002 may include at least one data center rack (not shown), at least one air cooling unit 1016a, 1016b, piping 1034 for coolant, power lines in a power tray 1011, fiberoptic cables in a fiber tray 1015, and/or a curtain 1042. A plurality of data center racks may be adjacently positioned along the floor plate 108. Specifically, there may be a plurality of data center rack recesses 1012 adjacently positioned with the openings facing first and second walls 1004a, 1004b. Each data center rack may be positioned in one of the data center rack recesses 1012.

A first air cooling unit 1016a may be positioned within the fourth wall 1004d, and a second air cooling unit 1016b may be positioned within the third wall 104c. The first and second air cooling units 1016a, 1016b may function to cool the interior of the individual containerized unit 1000.

The power and fiber trays 1011, 1015 may be positioned along an interior of the length of the roof 1006. The power tray 101 1may function to enable the transmission of power to the individual containerized unit 1000, and the fiber trays 1015 may function to enable the transmission of network connection to the individual containerized unit 1000.

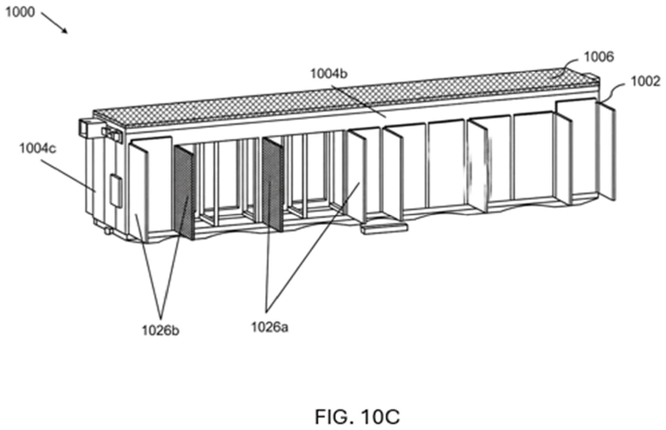

The first and second walls 1000a, 1004b of the enclosure 1002 may have at least one access panel 1026. For example, as shown in FIG. 10A, each of the first and second walls 1004a, 1004b may include eighteen total access panels 1026. The access panels 1026a, 1026b may function so that the interior of the enclosure 1002 can be accessed. The two access panels 1026b closest to the third wall 1004c and the two access panels 1026b closest to the fourth wall 1004d may provide access to the second air cooling unit 1016b, and the middle fourteen access panels 1026a may provide access to the racks. To open the access panels 1026a, 1026b, each access panel 1026a, 1026b may have a hinged connection to the enclosure 1002 so that each panel can rotate about the hinged connection. As shown in FIG. 10C, the hinged connection may be at an edge of the panel parallel to the third and fourth walls 1004b, 1004c so that the panel can moved outwards or inwards. In other aspects, the hinged connection may be at an edge of the panel parallel to the roof 1006 so that the panel can be moved upwards or downwards, or the access panels may be received along tracks to slidably open. In some aspects, a vehicle may be able to dock within a space in the enclosure 1002 when the access panel 1026a, 1026b is opened. In other aspects, there may be any number of access panels positioned on any wall of the enclosure 1002.

Since the internal components of the individual containerized unit 1000 can be accessed through access panels 1026a, 1026b, the individual containerized unit 1000 may not be designed for internal access outside of the access panels 1026a, 1026b. As such, aisle space may be reduced, resulting in a reduction of required real estate.

Curtain 1042 may extend between third and fourth walls 1004c,d and may be positioned parallel to first and second walls 1004a,b. Curtain 1042 may protect an interior within the enclosure 1002 from dust and water ingress, for example.

The individual containerized unit 1000 may use a dark data center operational model with off-site maintenance, as described in further detail in connection with FIGs. 1A and 1B.

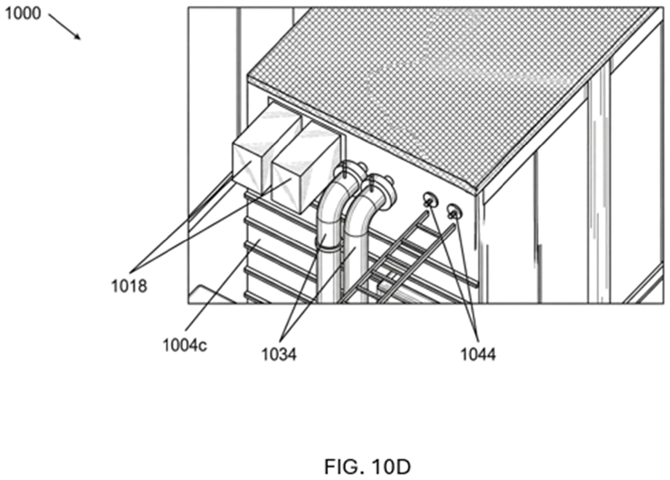

FIG. 10D illustrates the example individual containerized unit 1000 with a focus on connections to power, coolant, and fiberoptic cables on third wall 1004c. For connection to power, individual containerized unit 1000 may include electrical panels 1018. Two electrical panels 1018 may be positioned on the third wall 1004c. The electrical panels 1018 may enable transmission of power to the individual containerized unit 1000.

For connection to coolant, individual containerized unit 1000 may include piping 1034. Two pipes 1034 may be positioned on the third wall 1004c. The piping 1034 may enable transmission of coolant to the individual containerized unit 1000.

For connection to fiberoptic cables, individual containerized unit 1000 may include fiberoptic cable connectors 1044. Fiberoptic cable connectors 1044 may be positioned on the third wall 1004c. The fiberoptic cable connectors 1044 may enable transmission of fiberoptic signals to the individual containerized unit 1000.

In other aspects, the electrical panels 1018, the pipes 1034, and/or the fiberoptic cable connectors 1044 may be positioned on any wall of the enclosure 1002. Further, there may be any number of electrical panels 1018, the pipes 1034, and/or the fiberoptic cable connectors 1044.

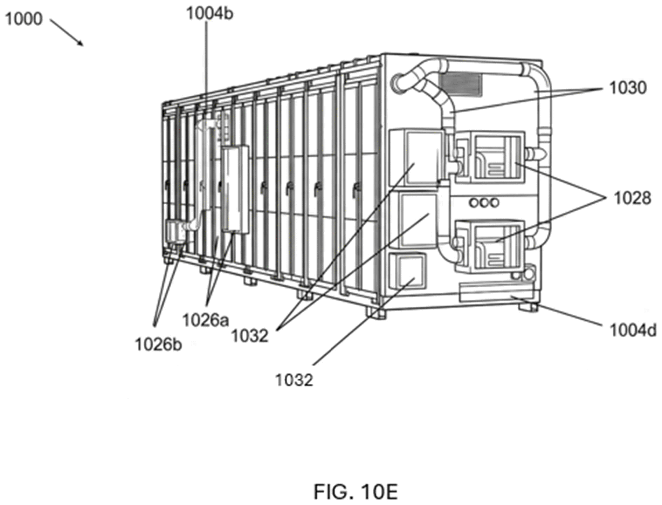

FIG. 10E illustrates the example individual containerized unit 1000 with a focus on dehumidifier units 1029 and pressurization units 1028on fourth wall 1004d. There may be two dehumidifier units 1029 on fourth wall 1004d, but in other examples, there may be any number of dehumidifier units. The dehumidifier units 1029 may remove excess moisture from the air to control a humidity level inside the individual containerized unit 1000. Such moisture may be removed through dehumidifier piping 1030. There may be two pressurization units 1028 on fourth wall 1004d, but in other examples, there may be any number of pressurization units. The pressurization units 1028 may be configured to maintain a negative pressure inside the individual containerized unit 1000. As such, when access panels 1026a, 1026b are opened, impurities such as dust from outside the individual containerized unit 1000 will not blow inside the individual containerized unit 1000.

In other aspects, the dehumidifier units 1029 and/or pressurization units 1028 may be positioned on any wall of the enclosure 1002. Further, there may be any number of dehumidifier units 1029 and/or pressurization units 1028.

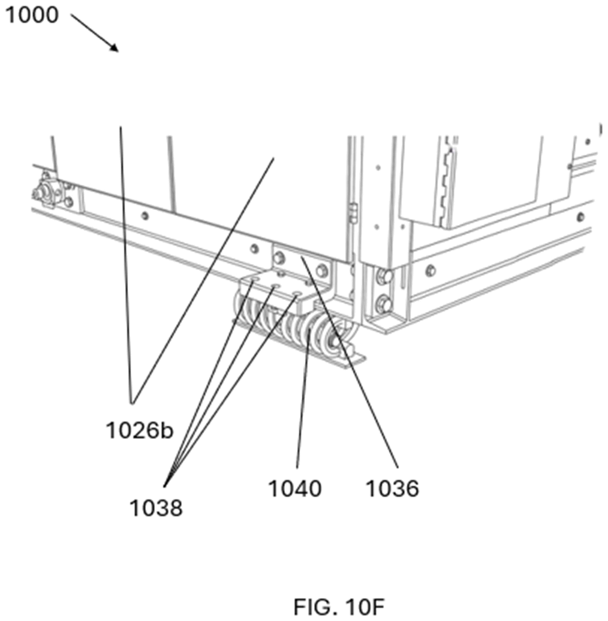

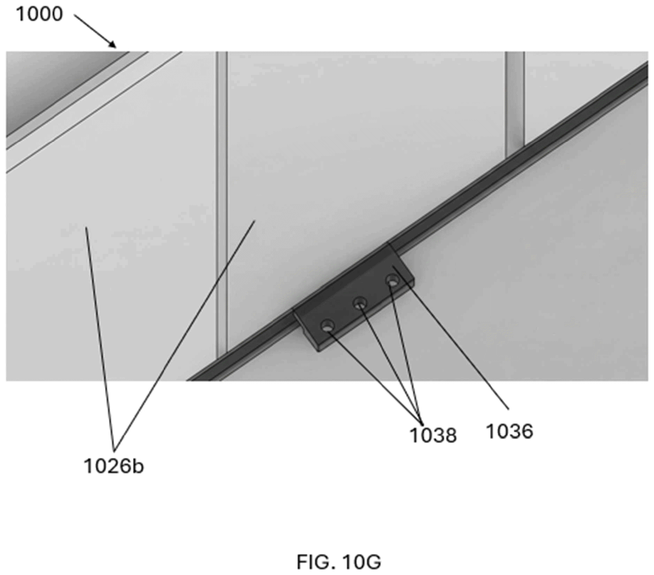

FIGs. 10F-10G illustrate the example individual containerized unit 1000 with a focus on isolator assembly 1040 and anchor clips 1036. Isolator assembly 1040 may be used for transporting the assembled individual containerized unit 1000 to a data center site. Isolator assembly 1040 may include shock isolators and/or vibration isolators to protect the internal components of the individual containerized unit 1000. Thus, the isolator assembly 1040 may be configured to reduce or prevent the transmission of shocks and/or vibrations between the individual containerized unit 1000 and its surroundings. As shown in FIG. 10F, Isolator assembly 1040 may be connected to a bottom of the individual containerized unit 1000. As shown in FIG. 10G, isolator assembly 1040 may be removed, for example, once the individual containerized unit 1000 is placed on a foundation in the data center site. Isolator assembly 1040 may be removably attached to individual containerized unit 1000 with a fastener, such as a bolt.

Anchor clips 1036 may be used to secure the individual containerized unit 1000 to the foundation in the data center site. Anchor clip 1036 includes fastener holes 1038 configured to receive a fastener, for example, to secure the individual containerized unit 1000 to a foundation. There may be three fastener holes 1038, which may enable flexibility with varying locations of foundations. However, in other examples, there may be any number of fastener holes.

Individual containerized unit 1000 may have a length ranging from 40 to 60 feet, a width ranging from 6 to 10 feet, and a height ranging from 10 to 14 feet.

Individual containerized unit 1000 may include various sensors to maintain an optimal internal environment. For example, individual containerized unit 1000 may include temperature sensors, humidity sensors, pressure sensors, and/or leak detection sensors. A monitoring system may be configured to receive input from the sensors and to provide as output an indication that service is required.

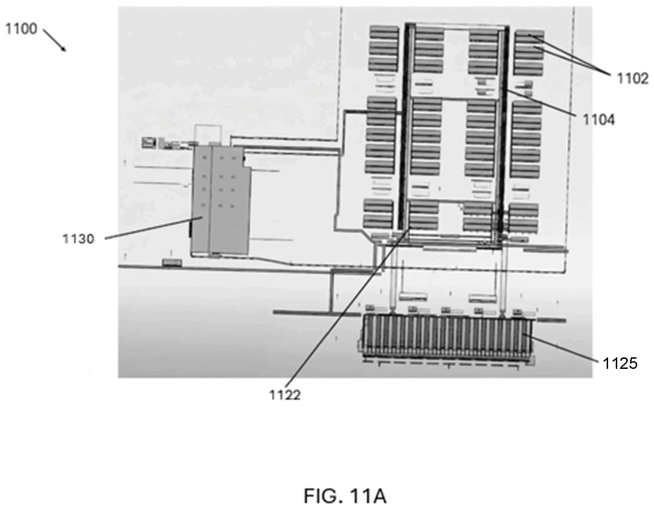

FIGs. 11A-11C illustrate an example layout of a data center site 1100. Data center site 1100 is similar to data center site 700 of FIG. 7. Therefore, like elements include similar numerals within the 1100-series of numbers. The description of identical features is omitted for brevity, and the following focuses on the differences between data center site 1100 and data center site 700.

Data center site 1100 differs in that there may be four columns and four rows of each set of individual containerized units 1102 for a total of 80 individual containerized units 1102 in the site 1100. However, as stated above, there may be any number of columns and rows of sets of individual containerized units, depending on the need of the site.

Data center site 1100 also differs in that there is a mechanical yard 1125 located adjacent to the bottom column of containerized units 1102. The mechanical yard 1125 may support cooling, power, and environmental control systems of the data center site 1100. Data center site 1100 optimizes the design of a mechanical yard and removes the need for an electrical yard.

Additionally, data center site 1100 includes a site entrance building 1130, which may function as an office space or for security reasons.

Additionally, data center site 1100 differs in that the highway system 804 may include piping 1122 below medium-voltage power lines 1118 and the low-voltage power lines 1120. Further, the fiberoptic cables 1124 may be positioned within a trench adjacent to the piping 1122, medium-voltage power lines 1118, and low-voltage power lines 1120. However, as stated above, the medium-voltage power lines 1118, the low-voltage power lines 1120, the piping 1122, and the fiberoptic cables 1124 may be positioned in any order. The piping 1122 may be routed underneath the individual containerized units 1102. For example, the piping 1122 can be routed through openings in a base, such as one of bases 110, 110', 210, 310, 510, 610. In other examples, the piping 1122 may be routed through a side wall of the individual containerized units 1102, such as detailed in connection with FIG. 11D.

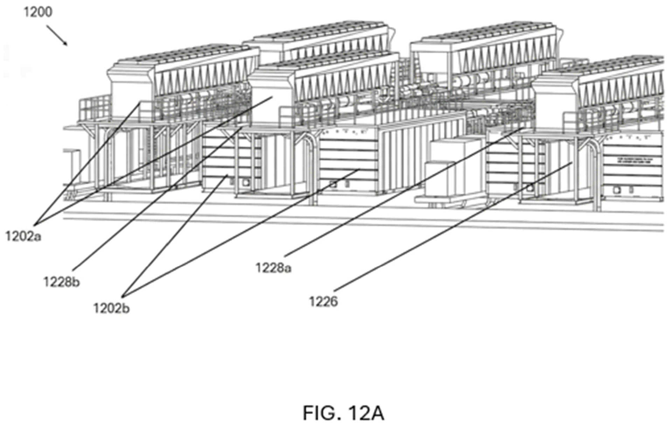

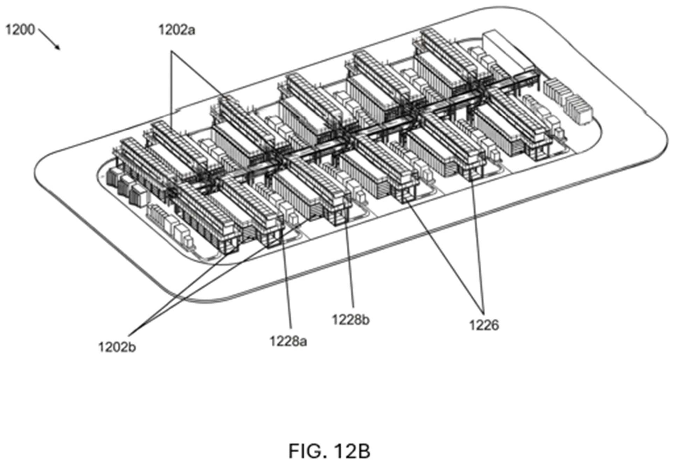

FIG. 12 illustrates another example layout of a data center site 1200. Data center site 1200 is similar to data center site 700 of FIG. 7. Therefore, like elements include similar numerals within the 1200-series of numbers. The description of identical features is omitted for brevity, and the following focuses on the differences between data center site 1200 and data center site 700.

Data center site 1200 differs in that there may be chilling units 1202a stacked above individual containerized units 1202b. Individual containerized units 1202b may be positioned on a foundation of the data center site 1200. To support an upper level, a first platform 1228a may be positioned on top of two individual containerized units 1202b and a framing unit 1226 positioned between the two individual containerized units 1202b. Additionally, a second platform 1228a may be positioned on top of two framing units 1226 and one individual containerized unit 1202b positioned between the two framing units 1226. The platform 1228a, 1228b may support one chilling unit 1202a. For platform 1228a, the chilling units 1202a may be positioned over the framing unit 1226. For platform 1228b, the chilling unit 1202a may be positioned over the individual containerized unit 1202b. Such stacking enables more units and chilling units to be included on a smaller area of land. Chilling units 1202a may be configured to cool coolant to be directed to the individual containerized units 1202b.

Any of the data center sites described above, such as data center sites 700, 800, 900, 1100, 1200, may include individual containerized units 100, 100', 200, 500, 600, and/or 1000 described above. Additionally, data center sites 700, 800, 900, 1100, 1200 may include a combination of individual containerized units 100, 100', 200, 500, 600, and/or 1000 and any other data center unit that is containerized and standalone. However, in other aspects, data center sites 700, 800, 900, 1100, 1200 may include any data center that is containerized and standalone.

The individual containerized units 100, 100', 200, 500, 600, and/or 1000 may include any of the components of data centers described above, such as enclosures 102, 202, 402, 502, 1002 and/or bases 110, 110', 210, 310, 510, 610. However, in other aspects, individual containerized units 100, 100', 200, 500, 600, and/or 1000 may include any base that enables piping to be directed inside of the data center, such as through a piping system underneath. Additionally, in other aspects, individual containerized units 100, 100', 200, 500, 600, and/or 1000 may include any type of enclosure that houses the interior components of the data center.

The individual containerized units 100, 100', 200, 500, 600, and/or 1000 may include components for AI/ML. For example, the individual containerized units 100, 100', 200, 500, 600, and/or 1000 may include AI racks, such as AI racks 613.

In other aspects, individual containerized units 100, 100', 200, 500, 600, and/or 1000 may be intended for a data center site layout not described herein.

In other aspects, data center sites 700, 800, 900, 1100, 1200 may include data centers not described herein but that include enclosures 102, 202, 402, 502, 1002 and/or bases 110, 110', 210, 310, 510, 610.

According to an aspect, there is provided a data center site layout that is designed to eliminate several components from traditional data center sites and to support artificial intelligence (AI)/machine learning (ML) workloads, which have increasing power demands as high-performance computing systems and thus require significant cooling. These components may be eliminated through a highway system including power lines, piping for coolant, and/or fiberoptic cables routed between sets of standalone, containerized data centers. As such, the data center site can include microgrids for on-site energy production and may remove the need for freshwater. The design may further include a network of piping between data centers to circulate coolant within advanced liquid cooling technology.

Unless otherwise stated, the foregoing alternative aspects and examples are not mutually exclusive, but may be implemented in various combinations to achieve unique advantages. As these and other variations and combinations of the features discussed above can be utilized without departing from the subject matter defined by the claims, the foregoing description of the examples should be taken by way of illustration rather than by way of limitation of the subject matter defined by the claims. In addition, the provision of the examples described herein, as well as clauses phrased as "such as," "including" and the like, should not be interpreted as limiting the subject matter of the claims to the specific examples; rather, the examples are intended to illustrate only one of many possible implementations. Further, the same reference numbers in different drawings can identify the same or similar elements.

## Claims

1. A data center site comprising:
at least two containerized, standalone data center units positioned adjacent to each other, each unit housing at least data center rack; and
a highway system between the at least two units, the highway system comprising piping configured to transport coolant to cool the at least two containerized, standalone data center units;
wherein the units are not enclosed by a building.

2. The data center site of claim 1, wherein the at least two containerized, standalone data center units are positioned on a first level below a second level, and wherein the data center site further comprises a chilling unit on the second level.

3. The data center site of claim 2, wherein the chilling unit is positioned on a platform positioned above one of the at least two containerized, standalone data center units.

4. The data center site of one of claims 1 to 3, wherein the piping is in two lanes.

5. The data center site of one of claims 1 to 4, wherein the highway system further comprises power lines and fiberoptic cables.

6. The data center site of claim 5, wherein the piping is positioned underneath the power lines; and/or
wherein the piping is positioned adjacent to at least one of the power lines or the fiberoptic cables; and/or
wherein the power lines include low-voltage power lines or medium-voltage power lines; and/or
wherein the fiberoptic cables are positioned within a trench.

7. An individual containerized unit comprising:
an enclosure comprising:
a first wall connected to a third wall and a fourth wall, wherein the third wall opposes the fourth wall;
a second wall connected to the third and fourth walls, wherein the first wall opposes the second wall;
a roof connected to at least one of the first, second, third, or fourth walls;
a floor plate connected to at least one of the first, second, third, or fourth walls, the roof opposing the floor plate; and
at least one aperture within at least one of the first or third walls;
a plurality of data center racks positioned in a row on the floor plate; and
an air cooling unit on an end of the row of the plurality of data center racks;
wherein at least one of the plurality of data center racks or an air cooling unit is accessible from the at least one aperture.

8. The individual containerized unit of claim 7, further comprising at least one access panel attached to the enclosure such that each of the at least one access panel is configured to cover the at least one aperture.

9. The individual containerized unit of claim 7 or claim 8, further comprising an isolator assembly connected to the floor plate, the isolator assembly comprising at least one of a shock isolator or a vibration isolator.

10. The individual containerized unit of claim 9, wherein the isolator assembly is removable.

11. The individual containerized unit of one of claims 7 to 10, further comprising an anchor clip comprising at least one fastener hole configured to receive a fastener to secure the individual containerized unit to a foundation.

12. The individual containerized unit of one of claims 7 to 11, further comprising at least one dehumidifier unit on one of the first, second, third, or fourth walls, the at least one dehumidifier unit being configured to remove excess moisture from air within the individual containerized unit to control a humidity level inside the individual containerized unit; and/or
further comprising at least one pressurization unit on one of the first, second, third, or fourth walls, the at least one pressurization unit being configured to maintain a negative pressure inside the individual containerized unit.

13. The individual containerized unit of one of claims 7 to 12, further comprising a first pipe on one of the first, second, third, or fourth walls, the first pipe being configured to transmit coolant to the individual containerized unit.

14. The individual containerized unit of claim 13, further comprising a second pipe on the one of the first, second, third, or fourth walls, the second pipe being configured to transmit warmed coolant away from the individual containerized unit; and/or
wherein the one of the first, second, third, or fourth walls that comprises the first pipe further comprises at least one electrical panel and at least one fiberoptic cable connector.

15. The individual containerized unit of one of claims 7 to 14, further comprising a curtain in an interior of the individual containerized unit.
